# EUROPÄISCHE PATENTSCHRIFT

(11) **EP 0 704 930 B1**
(45) Veröffentlichungstag und Bekanntmachung des Hinweises auf die Patenterteilung: **26.11.2003**
(21) Anmeldenummer: 95115353.5
(22) Anmeldetag: 28.09.1995
(51) Int. Cl.: H01R 4/24, H02B 13/035, H01R 13/646, H01R 9/05

(54) **Schneidklemm-Anschlusseinrichtung und Vorrichtung zur Führung von zu verbindenden Leitern zu derselben**
Cutting terminal- and contact element and device for guiding and forming conductors together
Borne auto-denudante et système de connexion ainsi que le dispositif pour guider et relier le câble à celui-ci

(30) Priorität: 28.09.1994 DE 4434702; 14.06.1995 DE 19521714; 14.06.1995 DE 29509719 U; 14.06.1995 DE 29509732 U
(43) Veröffentlichungstag der Anmeldung: 03.04.1996
(73) Patentinhaber: TYCO Electronics Logistics AG, 9323 Steinach (CH)
(72) Erfinder: Acke, Edgard, Ing.-Grad., B-8020 Oostkamp (BE); Leeman, Reginald, B-8400 Oostende (BE)
(74) Vertreter: Klunker . Schmitt-Nilson . Hirsch

(56) Entgegenhaltungen:
- EP-A- 0 145 407
- EP-A- 0 228 750
- EP-A- 0 419 038
- WO-A-93/19498
- US-A- 3 750 090
- US-A- 4 927 378
- US-A- 4 973 258
- US-A- 5 037 329

## Beschreibung

Die vorliegende Erfindung betrifft eine Schneidklemmanschlußeinrichtung gemäß Oberbegriffen des Patentanspruchs 1.

Die EP-A-0 419 038 zeigt eine Schneidklemm-Anschlußeinrichtung für ein Koaxialkabel mit einem Isolierstoffgehäuse, in welchem aus einem gebogenen Stanzteil gefertigtes Schneidklemm-Anschlußelement gelagert ist, und an dem gelenkig ein ebenfalls aus Isolierstoff bestehender Kabelanschlußstutzen angebracht ist. Das in den Kabelanschlußstutzen eingeführte Ende des Koaxialkabels wird in Richtung des Gehäuses geklappt, wobei sich nach oben stehende Spitzen des Schneidklemm-Anschlußelements durch die Außenisolierung in den Kabelaußenleiter bohren. Auf jeder Kabelseite ist ein Paar von Anschlußspitzen vorgesehen, die derart in radialer Richtung des Kabels abgeschrägt sind, daß die Spitzen das Außenleiter-Geflecht des Kabels einerseits radial nach innen und andererseits radial nach außen drücken. Das Gehäuse und der Kabelanschlußstutzen sind mit Rasten bzw. Gegenrasten ausgestattet, um die Schneidklemm-Anschlußelemente in dem Außenleiter-Geflecht zu halten.

Die Schneidklemm-(IDC-)Anschlußtechnik für die abisolierfreie und lötfreie Kontaktierung isolierter elektrischer Leiter ist allgemein bekannt und wird unter anderem auch bei Verbindern für Koaxialkabel zum Anschluß und zur Kontaktierung des Kabelaußenleiters und des Kabelinnenleiters eingesetzt. Derartige Schneidklemm-Anschlüsse für Koaxialkabel sind z.B. aus der EP 0 228 750 B1 oder den US-Patentschriften 4,533,191, 4,533,193 und 4,533,199 bekannt.

Ferner ist aus der internationalen Anmeldung WO 93/19498 ein Kontaktgehäuse für den Anschluß eines Koaxialkabels bekannt, bei dem die Kontaktierung des Kabelaußenleiters und des Kabelinnenleiters ebenfalls lötfrei in Schneidklemm-(IDC-) Anschlußtechnik erfolgt. Hierbei ist mit dem Kontaktgehäuse eine ebenfalls aus elektrisch leitendem Material bestehende Verschlußhülse fest verbunden, wobei zur Kontaktierung des Kabelaußenleiters Messerkontakte unterschiedlicher, auf den Kabeldurchmesser abgestimmter Größe vorgesehen sind, die mittels einer Zange in das Kabel eingedrückt und mit dem Kabelschirm verklammert und dann von der am Kabelanschlußstutzen des Kontaktgehäuses befestigten topfförmigen Verschlußhülse fest umschlossen und verblockt werden. Bei dieser bekannten Einrichtung sind die Messerkontakte einer Größe bei gleichem Aufbau der Einrichtung gegen Messerkontakte einer anderen Größe austauschbar, so daß Koaxialkabel unterschiedlicher Durchmesser angeschlossen werden können.

Die in diesen Druckschriften beschriebenen Schneidklemm-Anschlußeinrichtungen können aus verschiedenen Gründen keine einfache und zuverlässige Herstellung von sicheren und haltbaren Verbindungen bzw. Kontaktierungen gewährleisten und sind daher diesbezüglich in mehrfacher Hinsicht verbesserungsbedürftig.

Ausgehend von einer Schneidklemm-Anschlußeinrichtung für Koaxialkabel, mit einem leitend ausgebildeten Gehäuse mit Kabelanschlußstutzen und Mitteln für den Schneidklemm-(IDC-)Anschluß des Kabelaußenleiters und des Kabelinnenleiters (Schneidklemm-Anschlußeinrichtung gemäß dem Oberbegriff des Patentanspruchs 1) liegt der vorliegenden Erfindung daher die Aufgabe zugrunde, eine solche Schneidklemm-Anschlußeinrichtung derart weiterzubilden, daß ein möglichst einfacher Anschluß vor allem des Kabelaußenleiters gewährleistet ist, der ohne spezielle Werkzeuge schnell und sicher auch von weniger qualifizierten Monteuren oder Nicht-Fachleuten durchführbar sein soll.

Diere Aufgabe wird durch die in dem kennzeichnenden Teil des Patentanspruchs 1 angegebenen Merkmale gelöst.

Vorteilhafte Ausgestaltung usgen der Erfindung sind in den abhängigen Patentansprüchen angegeben.

Bei einer derartigen Schneidklemm-Anschlußeinrichtung wird das anzuschließende Kabelende in dem Kabelanschlußstutzen des Gehäuses aufgenommen, wozu der Kabelanschlußstutzen eine ausreichende Länge aufweist und sein Innendurchmesser vorzugsweise etwa dem Außendurchmesser des Kabels - gemessen über dessen äußeren isolierenden Kabelmantel - entspricht. Das Kabel ist im Außenleiteranschlußbereich nicht abisoliert, d.h. nicht von dem äußeren Kabelmantel befreit. Lediglich im Innenleiteranschlußbereich ist zumindest der äußere Kabelmantel und der Kabelaußenleiter, gegebenenfalls, aber nicht notwendigerweise auch die innere Isolierung zwischen dem Kabelaußenleiter und dem Kabelinnenleiter entfernt. Der das Kabelende aufnehmende Kabelanschlußstutzen dient gleichzeitig auch der Einführung der Schneidklemm-Anschlußmittel für den Kabelaußenleiter. Hierzu ist der Kabelanschlußstutzen quer zu seiner Mittelachse mit mindestens einer nach außen offenen Ausnehmung oder mit entsprechenden mehreren Ausnehmungen versehen, so daß die Schneidklemm-Anschlußmittel für den Kabelaußenleiter von außen her in den Kabelanschlußstutzen einsteckbar sind und dabei den äußeren isolierenden Kabelmantel durchschneiden und den Kabelaußenleiter kontaktieren. Dieser Anschlußvorgang ist sehr einfach, schnell und unkritisch zu bewerkstelligen, so daß er keine besonderen Werkzeuge erfordert, sondern mit allgemein gebräuchlichem Werkzeug und ohne besondere Qualifikation von jedermann durchgeführt werden kann. Diese Art des Schneidklemm-Anschlusses für den Außenleiter eines Koaxialkabels ermöglicht zudem einen besonders einfachen Aufbau der Einrichtung, da hierzu lediglich der sowieso bei einer Anschlußeinrichtung für Koaxialkabel vorhandene Kabelanschlußstutzen und einfache, von außen in diesen Kabelanschlußstutzen einsteckbare Anschlußmittel erforderlich sind. Um besondere Maßnahmen und Teile zur Fixierung der eingesteckten Anschlußmittel zu vermeiden und den Aufbau der Anschlußeinrichtung nicht zum Zwecke der Fixierung der Anschlußmittel zu komplizieren, sind die in die Ausnehmungen des Kabelanschlußstutzens eingesteckten Anschlußmittel für den Kabelaußenleiter selbstklemmend in den Ausnehmungen gehalten.

Bei der erfindungsgemäßen Schneidklemm-Anschlußeinrichtung bestehen die Mittel für den Schneidklemm-Anschluß des Kabelaußenleiters in vorteilhafter Weise aus mindestens einer etwa U-förmigen Klammer, deren Innenkanten als Schneidzonen ausgebildet sind. Derartige Anschlußmittel sind leicht herstellbar und in einfacher Weise beim Anschlußvorgang montierbar. Außerdem haben U-förmige und damit in sich federnde IDC-Klammern durch die beiden über einen Mittelsteg verbundenen Seitenschenkel eine derartige Form, daß beim Aufdrücken einer Klammer auf ein Kabel bzw. beim Einschneiden in den isolierenden äußeren Kabelmantel bis in den Kabelaußenleiter die beiden Seitenschenkel der Klammer im Gegensatz zu starren Kontaktelementen dauerhaft eine elastische Klemmspannung ausüben. Dabei entstehen durch die U-Form der Klammer über die beiden Seitenschenkel und den Mittelsteg mehrere Kontaktpunkte am Kabelumfang. Insgesamt wird dadurch eine gasdichte, niederohmige Verbindung zwischen dem Kabelaußenleiter und einer IDC-Klammer gewährleistet. Um den Effekt der elastischen Klemmspannung noch weiter zu unterstützen, ist es zweckmäßig, wenn die Seitenschenkel einer Klammer an ihrem freien Ende einen etwas geringeren Abstand voneinander haben als im Bereich ihrer vom Mittelsteg ausgehenden Basis, so daß die Klammern mit einer gewissen Vorspannung auf das Kabel aufgedrückt werden.

Hinsichtlich der Fixierung der Klammern ist es zweckmäßig, wenn der die Seitenschenkel miteinander verbindende Mittelsteg der Klammer an mindestens einer seitlichen Außenfläche eine Rändelung aufweist und zur selbstklemmenden Halterung der Klammer in die Ausnehmung des Kabelanschlußstutzens eingepreßt ist. Die von außen in den Kabelanschlußstutzen eingesteckten Klammern sind dann ohne weiteres, d.h. ohne zusätzliche Elemente und ohne weitere Maßnahmen, sicher in dem Kabelanschlußstutzen festgehalten.

Die erfindungsgemäße Schneidklemm-Anschlußeinrichtung ist sowohl für Koaxialkabel eines bestimmten Durchmessers als auch für Koaxialkabel unterschiedlicher Durchmesser verwendbar. Beim Anschluß von Koaxialkabeln eines bestimmten Durchmessers ist der Innendurchmesser des Kabelanschlußstutzens etwa gleich dem Außendurchmesser des Koaxialkabels über dessen äußeren isolierenden Kabelmantel. Beim Anschluß von Koaxialkabeln unterschiedlicher Durchmesser ist in den Kabelanschlußstutzen eine aus Isoliermaterial bestehende, kabelangepaßte Adapterhülse verdrehsicher eingesetzt und an ihrer Wandung mit quer zu ihrer Mittelachse verlaufenden, nach außen offenen Ausnehmungen versehen, die im verdrehsicher eingesetzten Zustand über die Ausnehmungen des Kabelanschlußstutzens zur Einführung kabelangepaßter Klammern zugänglich sind. In diesem Fall ist der Innendurchmesser des Kabelanschlußstutzens etwa gleich dem Außendurchmesser der eingesetzten Adapterhülse und deren Innendurchmesser gleich dem Außendurchmesser des Koaxialkabels über dessen äußeren isolierenden Kabelmantel.

Bei einer erfindungsgemäßen Schneidklemm-Anschlußeinrichtung sind die Ausnehmungen des Kabelanschlußstutzens und im Falle der Verwendung einer zusätzlichen, in den Kabelanschlußstutzen einsetzbaren Adapterhülse deren Ausnehmungen vorzugsweise in Form von Schlitzen ausgebildet, die in einer der Anzahl und Anordnung der Klammern im Kabelanschlußstutzen entsprechenden Anzahl und Anordnung vorgesehen werden. So können z.B. für den Anschluß eines Kabelaußenleiters vier IDC-Klammern verwendet werden, die paarweise etwa einander gegenüberliegend am Kabelanschlußstutzen positioniert sind. Nach Bedarf können mehrere oder weniger IDC-Klammern vorgesehen werden.

Die Mittel zum Schneidklemm-Anschluß des Kabelaußenleiters bestehen bei der bisher beschiebenen Lösung aus den angegebenen Gründen in bevorzugter Weise aus U-förmigen IDC-Klammern, können aber auch eine andere Form haben. So ist es z.B. möglich, daß die Mittel für den Schneidklemm-Anschluß des Kabelaußenleiters von mindestens zwei am Außenumfang gerändelten, leitend ausgebildeten Klemmstöpseln gebildet sind, die von entgegengesetzten Seiten radial in Bohrungen der Wandung des Kabelanschlußstutzens selbstklemmend in diese eingepreßt sind und an derjenigen Seite, welche dem in den Kabelanschlußstutzen eingeführten Koaxialkabel zugewandt ist, mit Schneidzonen ausgebildet sind.

Alternativ oder ergänzend hierzu kann auch vorgesehen sein, daß die Mittel für den Schneidklemm-Anschluß durch mindestens einen Klemmstöpsel gebildet sind, welcher derart ausgebildet ist, daß er an derjenigen Seite, welche beim Einstecken in die Ausnehmung dem in den Kabelanschlußstutzen eingeführten Koaxialkabel zuzuwenden ist, eine Aussparung zur teilweisen Aufnahme des Koaxialkabels aufweist.

Die Ausbildung des Klemmstöpsels mit einer Aussparung, in welche das anzuschließende Kabel teilweise aufnehmbar ist, ermöglicht es, daß der Klemmstöpsel nicht nur etwa an einem oder wenigen ausgewählten Punkten, sondern nahezu beliebig großflächig in elektrischen Kontakt mit dem anzuschließenden Kabel kommen kann, so daß die dabei entstehende elektrische Verbindung extrem niederohmig und dauerhaft haltbar ist.

Durch die vorstehend beschriebene Lösung wurde eine Schneidklemm-Anschlußeinrichtung geschaffen, durch welche ein äußerst einfacher Anschluß vor allem des Kabelaußenleiters gewährleistet ist, der ohne spezielle Werkzeuge schnell und sicher auch von weniger qualifizierten Monteuren oder Nicht-Fachleuten durchführbar ist.

Abgesehen davon sind Körper mit erfindungsgemäß geneigten Flächen leichter herzustellen als Körper mit den erwähnten sprungartig ausgebildeten Fortsätzen oder Erhebungen.

Durch die beschriebene Lösung wurde eine Vorrichtung zur Führung der zu verbindenden Leiter zu der Schneidklemm-Anschlußeinrichtung in Form eines Isolierteils geschaffen, welches es ermöglicht, daß bei dessen Verwendung zum Abstützen und Zentrieren eines Innenleiters in einem Außenleiter die elektrischen Eigenschaften einfach, genau und zuverlässig auf gewünschte Werte einstellbar sind.

Die erfindungsgemäße Schneidklemm-Anschlußeinrichtung sind für koaxiale Steckverbindungen wie Winkelstecker und Kabelkuppler, insbesondere, aber nicht ausschließlich zum Anschluß von Koaxialkabeln kleinerer Familien, z.B. der Größenordnung 1,0/2,3 oder 1,6/5,6, geeignet. Ausführungs- und Anwendungsbeispiele bei einem Winkelsteckverbinder und bei einem geraden Steckverbinder sind in den Zeichnungen dargestellt und im folgenden näher beschrieben. Es zeigen
Figur 1 einen winkligen Koaxial-Kabelkuppler in teilweiser geschnittener Seitenansicht,
Figur 2 eine Ansicht II-II nach Figur 1,
Figur 3 eine Schnittdarstellung III-III nach Figur 2
Figur 4 eine Schnittdarstellung IV-IV nach Figur 1,
Figur 5 einen koaxialen geraden Steckverbinder in teilweise geschnittener Seitenansicht,
Figur 6 eine zusätzliche, teilweise geschnitten dargestellte Adapterhülse für den Steckverbinder nach Figur 5,
Figur 7 zwei anzuschließende, teilweise abisolierte Enden von Koaxialkabeln,
Figur 8 den grundsätzlichen Aufbau eines koaxialen Winkelsteckverbinders mit einer zusätzlichen Adapterhülse nach Figur 6,
Figur 9 im Schnitt eine weitere Ausführungsform einer Schneidklemm-Anschlußeinrichtung bei einem koaxialen Winkelsteckverbinder,
Figur 10 Einzelteile des Steckverbinders nach Figur 9 im Schnitt,
Figur 11 eine Schnittansicht einer weiteren Ausführungsform eines Koaxialkabel-Winkelsteckverbinders, in welchem Ausführungsbeispiele erfindungsgemäßer Schneidklemm-Anschlußeinrichtungen und ein Ausführungsbeispiel der erfindungsgemäßen Vorrichtung zur Führung von zu verbindenden Leitern zu der Schneidklemm-Anschlußeinrichtung zum Einsatz kommen,
Figur 12 eine Draufsicht auf einen Klemmstöpsel von der dem anzuschließenden Koaxialkabel zuzuwendenden Seite,
Figur 13 eine teilweise geschnittene Seitenansicht eines gegenüber dem in Figur 12 gezeigten Klemmstöpsel verändert ausgebildeten Klemmstöpsels,
Figur 14 eine teilweise geschnittene Seitenansicht eines gegenüber den in den Figuren 12 und 13 gezeigten Klemmstöpseln verändert ausgebildeten Klemmstöpsels,
Figur 15 eine Draufsicht auf den in der Figur 14 gezeigten Klemmstöpsel von der dem anzuschließenden Koaxialkabel zuzuwendenden Seite,
Figur 16 eine Querschnittsansicht eines in einen Kabelanschlußstutzen des in Figur 11 gezeigten Koaxialkabel-Winkelsteckverbinders einzuführenden Koaxialkabels, und
Figur 17 eine Querschnittsansicht eines zwischen zwei Klemmstöpseln gemäß den Figuren 14 und 15 eingeklemmten Koaxialkabels,
Figur 18 eine gemäß Figur 11 von oben gesehene Ansicht des dort gezeigten Koaxialkabel-Winkelsteckverbinders unter Weglassen dessen Gehäuses,
Figur 19 eine vergrößerte Schnittansicht eines bereits in Figur 11 gezeigten Druckteils,
Figur 20 eine gemäß Figur 19 von rechts gesehene Ansicht des dort gezeigten Druckteils,
Figur 21 eine vergrößerte Schnittansicht des das erfindungsgemäße Isolierteil umfassenden Abschnittes des in Figur 11 gezeigten Koaxialkabel-Winkelsteckverbinders, und
Figur 22 eine gemäß Figur 21 von oben gesehene Ansicht des dort gezeigten Abschnitts des Koaxialkabel-Winkelsteckverbinders.

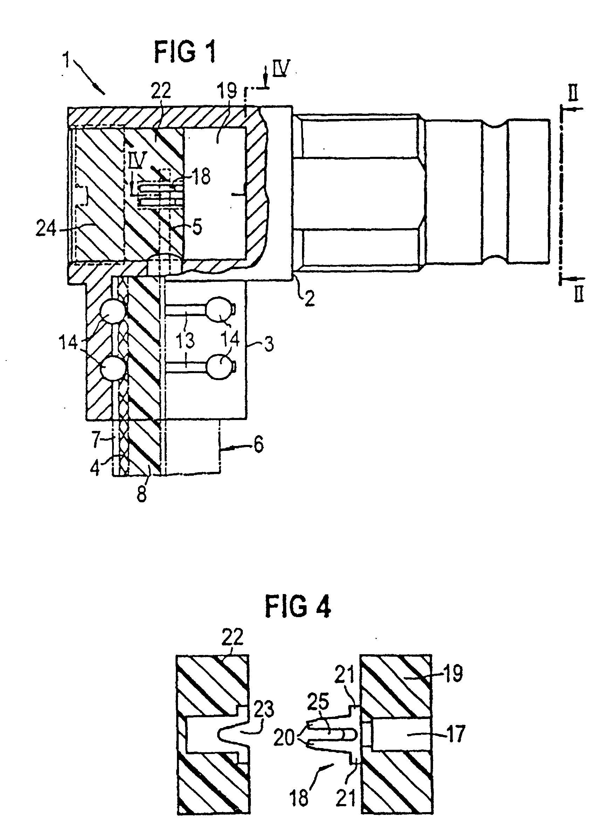

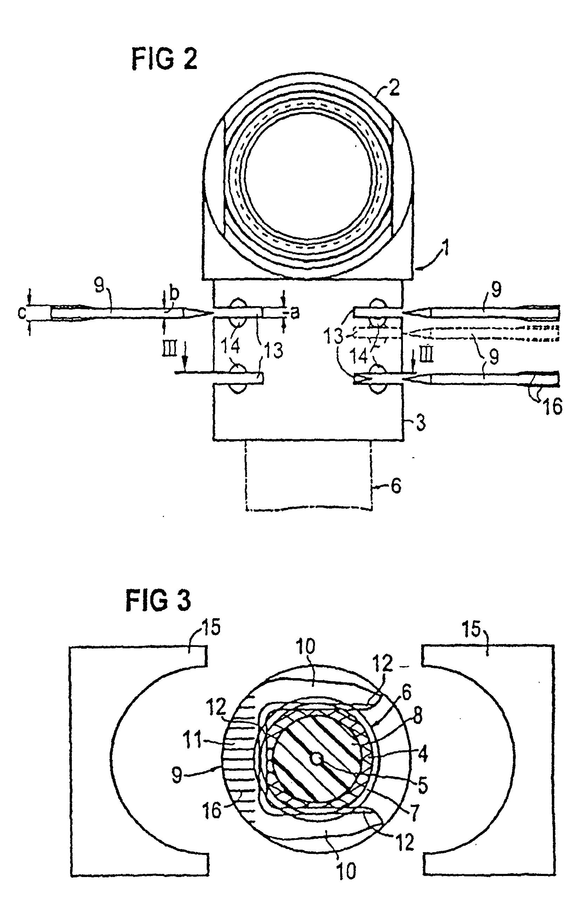

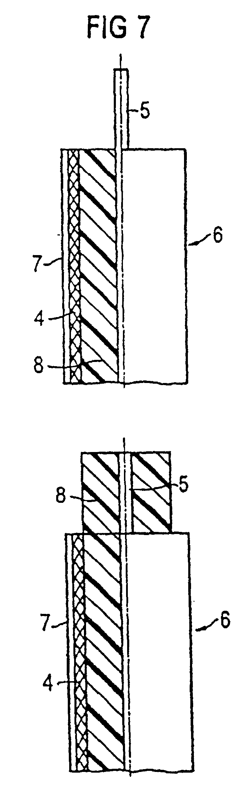

Der koaxiale Winkelsteckverbinder nach den Figuren 1 bis 4 besteht aus einem leitend ausgebildeten Gehäuse 1, z.B. einem Metallgehäuse, das mit einem von einem geraden Gehäuseteil 2 abgewinkelten Kabelanschlußstutzen 3 ausgebildet ist und Mittel für den Schneidklemm-(IDC-)Anschluß des Außenleiters 4 und des Innenleiters 5 eines Koaxialkabels 6 aufweist. Der Außenleiter 4 kann z.B. aus einem Schirmgeflecht bestehen, ist von einem äußeren isolierenden Kabelmantel 7 umgeben und durch die Innenisolierung 8 gegen den Innenleiter 5 isoliert. Zum Anschluß des Koaxialkabels 6 ist dessen Ende in der aus Figur 7 ersichtlichen Weise vorbereitet, d.h. am Kabelende wird ein Stück des Innenleiters 5 ganz abisoliert oder es wird lediglich der Kabelmantel 7 und der Außenleiter 4 im Bereich des Innenleiteranschlusses entfernt. Das so vorbereitete Koaxialkabel 6 ist zum Anschluß des Kabelinnenleiters und des Kabelaußenleiters in den Kabelanschlußstutzen 3 eingeführt. Hierzu ist bei der Ausführungsform nach den Figuren 1 bis 4 der Innendurchmesser des Kabelanschlußstutzens gleich dem Außendurchmesser des Koaxialkabels über dessen äußeren isolierenden Kabelmantel 7, so daß das Kabelende an der Innenwandung des Kabelanschlußstutzens anliegend in diesen passend aufgenommen ist. Zum Anschluß des Kabelaußenleiters 4, d. h. zu dessen lötfreier Kontaktierung und elektrischen Verbindung mit dem Gehäuse 1 sind mehrere U-förmige Klammern 9 aus Metall vorgesehen, welche durch die U-Form gebildete, federnde Seitenschenkel 10 und einen diese verbindenden Mittelsteg 11 aufweisen. Die Innenseiten der Seitenschenkel und des Mittelsteges sind als scharfkantige Schneidzonen 12 ausgebildet, welche in der Lage sind, den Kabelmantel 7 zu durchschneiden und in den Kabelaußenleiter 4 einzuschneiden. Außerdem sind die freien Enden der Seitenschenkel 10 der Klammern 9 als Stechspitzen gestaltet. Bei der in den Figuren 1 bis 4 dargestellten Ausführungsform werden zum Anschluß des Kabelaußenleiters 4 insgesamt vier Klammern 9 verwendet, die paarweise einander gegenüberliegend am Kabelanschlußstutzen positioniert werden. Es ist auch möglich, die Klammern - wie in Figur 2 durch eine strichliert angedeutete Klammer erkennbar ist - in Richtung der Mittelachse des Kabelanschlußstutzens 3 gegeneinander versetzt anzuordnen. Die Klammern 9 werden von außen her seitlich in den Kabelanschlußstutzen eingeführt. Hierzu ist der Kabelanschlußstutzen mit einer der Anzahl der Klammern 9 entsprechenden Anzahl von Ausnehmungen versehen, die von Schlitzen 13 der Wandung des Kabelanschlußstutzens gebildet sind, welche nach außen offen sind und quer zu seiner Mittelachse verlaufen. Als weitere Ausnehmungen zur Einführung der Seitenschenkel 10 einer Klammer 9 sind in der Wandung des Kabelanschlußstutzens 3 im Bereich der Schlitze 13 Querbohrungen 14 angeordnet, wobei je Klammer zwei Querbohrungen für die beiden Seitenschenkel der Klammer vorgesehen sind. Der Abstand der beiden Querbohrungen 14 richtet sich nach dem Abstand der Seitenschenkel 10 voneinander, wobei wie - Figur 3 erkennen läßt - der innere Abstand der Seitenschenkel der Klammern voneinander geringer als der Außendurchmesser des Kabelaußenleiters 4 und größer ist als der Außendurchmesser der Innenisolierung 8 zwischen dem Kabelaußenleiter 4 und dem Kabelinnenleiter 5 ist. Dadurch sind die Klammern so ausgebildet, daß sie beim Einführen in die Ausnehmung 13, 14 den äußeren isolierenden Kabelmantel 7 durchschneiden und den Kabelaußenleiter 4 kontaktieren und ihn elektrisch leitend mit dem Gehäuse verbinden. Zur Einführung der Klammern oder zumindest zu Eindrücken der Klammern in die Ausnehmungen 13, 14 und zum Aufschieben auf das Koaxialkabel 6 können einfache, allgemein gebräuchliche Werkzeuge verwendet werden, z. B. die Backen 15 einer Klemmzange (Figur 3), wobei es zweckmäßig ist, wenn die Außenstirnseite des Mittelsteges 11 der Klammern und die Innenseiten der Backen 15 in ihrer Form einander angepaßt sind. Um die Klammern ohne weiteren Aufwand zu fixieren, ist es zweckmäßig, wenn die Klammern im in die Ausnehmungen 13, 14 eingesteckten Zustand selbstklemmend gehalten sind. Hierzu weist der Mittelsteg 11 der Klammern 9 an mindestens einer seitlichen Außenfläche - bei den dargestellten Ausführungsformen an zwei einander gegenüberliegenden seitlichen Außenflächen - eine Rändelung 16 auf, die in Einsteckrichtung der Klammern verläuft, so daß die Klammern in die Schlitze 13 des Kabelanschlußstutzens 3 eingepreßt werden können. Um hierbei eine sichere selbstklemmenden Halterung zu erreichen, ist es zweckmäßig, wenn die Dicke c einer Klammer 9 im Bereich des beidseitig gerändelten Mittelsteges 11 größer ist als die Breite a des Schlitzes 13 und dessen Breite a größer ist als die Dicke b der Seitenschenkel 10 der Klammern, so daß c > a > b (Figur 2). Die spannende Passung der Schneidzone 12 im Bereich der Dicke c des Mittelsteges 11 in den Schlitzen 13 mit der Abmessung a ist hierbei so gewählt, daß eine niedrigohmige Verbindung mit dem Gehäuse 1 gewährleitet ist. Die Klammern 9 sind also Doppelkontakte, welche die Kontaktierung des Kabelaußenleiters 4 und dessen elektrische Verbindung mit dem Gehäuse realisieren. Nach dem Einstecken der Klammern 9 in die Ausnehmungen 13, 14 bleiben die Seitenschenkel 10 elastisch freistehend gegenüber der Wandung des Kabelanschlußstutzens 3, so daß die Seitenschenkel 10 der Klammern den Kabelaußenleiter 4 elastisch spannend kontaktieren und geklemmt halten.

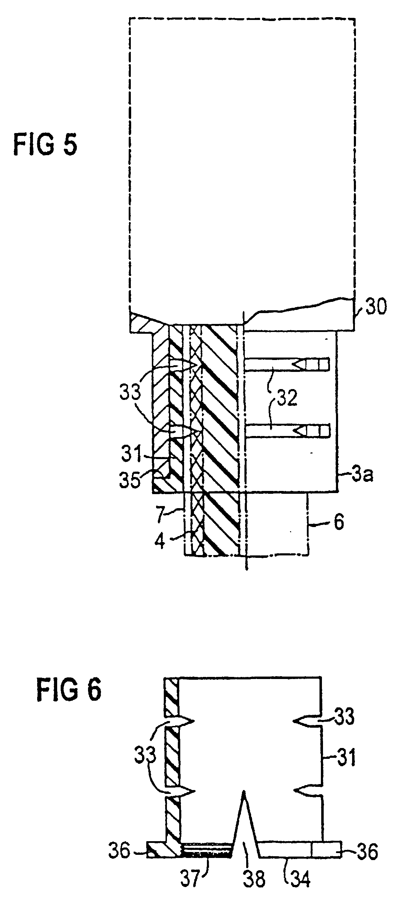

Eine Ausführungsform einer lötfreien und ebenfalls in IDC-Anschlußtechnik ausgeführten Innenleiterkontaktierung der Anschlußeinrichtung und des Koaxialkabels ist in den Figuren 1 und 2 dargestellt. Zum Anschluß des z. B. völlig abisolierten Innenleiters 5 des nach Figur 7 vorbereiteten Endes des Koaxilalkabels 6 und zur Innenleiterverbindung mit einem Gegensteckelement weist das gerade Gehäuseteil 2 einen Innenleiter 17 auf, welcher mit einem oder mehreren eingepreßten oder eingelöteten Schneidklemm-Kontaktelement 18 bzw. Schneidklemm-Kontaktelementn verbunden und in einem Isolierteil 19 koaxial in dem geraden Gehäuseteil 2 gehalten ist (Figur 4). Der Innenleiter 17 und das Schneidklemm-Kontaktelement 18 können aber auch einteilig ausgebildet sein. Das Schneidklemm-Kontaktelement 18 ist mit zwei einen Klemmschlitz 25 bildenden Schneidklemm-Gabelzinken 20 und seitlichen Schultern 21 ausgebildet, mit denen es an einer Stirnseite des Isolierteiles 19 anliegt. Ferner ist für den Schneidklemm-Anschluß des Kabelinnenleiters 5 noch ein aus Isoliermaterial bestehendes Druckstück 22 vorgesehen, welches an der dem Schneidklemm-Kontaktelement 18 zugewandten Seite so mit einer Aussparung 23 versehen ist, daß es auf das Kontaktelement 18 auflaufen kann. Hierzu ist eine Verschlußschraube 24 vorgesehen, die vom offenen Ende her in das gerade Gehäuseteil 2 einschraubbar ist, das Druckstück 22 gegen das Schneidklemm-Kontaktelment 18 und dieses mit den Schultern 21 gegen das Isolierteil 19 preßt, so daß das Kontaktelement 18 unbeweglich gegenüber eventuellen Betätigungsbewegungen des Innenleiters 17 festgeklemmt ist. Durch eine an die Kontaktdruckkraft entsprechend angepaßte Geometrie und Materialauswahl der Schneiklemm-Gabelzinken 20 wird ein sicherer niedrigohmiger Kontakt zwischen dem Innenleiter 17 und dem Kabelinnenleiter 5 gewährleistet. Das Grundprinzip, daß die Schneidklemm-Gabelzinken 20 nach dem Eindrücken des Kabelinnenleiters in das Schneidklemm-Kontaktelement 18 elastischen Klemmdruck ausüben, bleibt dabei gewährleitet.

Die in den Figuren 1 bis 4 dargestellte Ausführungsform ist bei dem dort vorgesehenen Kabelanschluß für Koaxialkabel eines bestimmten Durchmessers vorgesehen. Dementsprechend ist der Kabelanschlußstutzen 3 mit seinem Innendurchmesser kabelangepaßt. Ebenso sind die als Mittel zum Schneidklemm-(IDC-) Anschluß dienenden Klammern 9 kabelangepaßt. Für Koaxialkabel unterschiedlicher Durchmesser ist die Ausführungsform nach den Figuren 1 bis 4 nicht vorgesehen, d. h. für den Anschluß von Koaxialkabeln unterschiedlicher Durchmesser ist für jedes Kabel ein anderes Gehäuse mit anderen Abmessungen der Querbohrungen 14 und des Innendurchmessers des Kabelanschlußstutzens 3 zu verwenden.

Ein Ausführungsbeispiel einer erfindungsbemäßen Schneidklemm-Anschlußeinrichtung, bei der Koaxialkabel unterschiedlicher Durchmesser angeschlossen werdn können, ist in den Figuren 5 und 6 dargestellt, welche einen geraden Kabelsteckverbinder zeigen. Dieser besitzt ein durchgehendes gerades Gehäuse 30 mit einem nicht abgewinkelten Kabelanschlußstutzen 3a, dessen Innendurchmesser gleich dem Außendurchmesser einer aus Isoliermaterial bestehenden, kabelangepaßten Adapterhülse 31 ist. Diese zum Beispiel von einem Kunststoffspritzteil gebildete Adapterhülse 31 (Figur 6) hat demzufolge einen Innendurchmesser, der gleich dem Außendurchmesser des Koaxialkabels 6 über dessen äußeren isolierenden Kabelmantel 7 ist. Auf diese Weise ist es möglich, einen Anschluß von Koaxialkabeln verschiedener Durchmesser mit einem Standardgehäuse zu realiesieren, in das als zusätzliches Teil die Adapterhülse 31 eingesetzt wird und bei dem die zum Anschluß des jeweiligen Kabelaußenleiters beispielsweise verwendeten U-förmigen Klammern 9a ebenfalls kabelangepaßt sind. Die Wandung der Adapterhülse 31 ist entsprechend der Ausführung des Kabelanschlußstutzens 3a - der hier nur mit quer zu seiner Mittelachse verlaufenden, nach außen offenen Ausnehmungen in Form von Schlitzen 33 und nicht mit zusätzlichen Querbohrungen versehen ist - zur Einführung der Klammern 9a mit quer zu ihrer Mittelachse verlaufenden, nach außen offenen Ausnehmungen, z.B. in Form von Schlitzen 33 ausgebildet, welche im in den Kabelanschlußstutzen 3a eingesetzten Zustand der Adapterhülse 31 über die Schlitze 32 des Kabelanschlußstutzens zugänglich sind. Um dabei die Schlitze 33 der Adapterhülse 31 auf die Schlitze 32 des Kabelanschlußstutzens selbstätig auszurichten, ist die Adapterhülse 31 im Bereich ihrer nach außen weisenden Stirnseite 34 mit seitlich abstehenden, in entsprechende Aussparungen 35 der Wandung des Kabelanschlußstutzens 3a eingreifenden Vorsprüngen 36 ausgebildet, die so angeordnet sind, daß sich die Schlitze 33 der in den Kabelanschlußstutzen eingesetzten Adapterhülse 31 im Bereich der Schlitze 32 des Kabelanschlußstutzens befinden. Dadurch ist die Adapterhülse verdrehsicher in den Kabelanschlußstutzen einsetzbar. Außerdem ist die Adapterhülse 31 im Bereich ihrer nach außen weisenden Stirnseite 34 an ihrer Innenwandung mit einer durch scharfkantige Rillen gebildeten Kabelklemmzone 37 und mit in der Mittelachse liegenden, zur Stirnseite hin offenen Schlitzen 38 versehen. Diese Schlitze ergeben eine gewisse Elastizität der Adapterhülse beim Erfassen oder Eingreifen des Kabels durch die Kabelklemmzone.

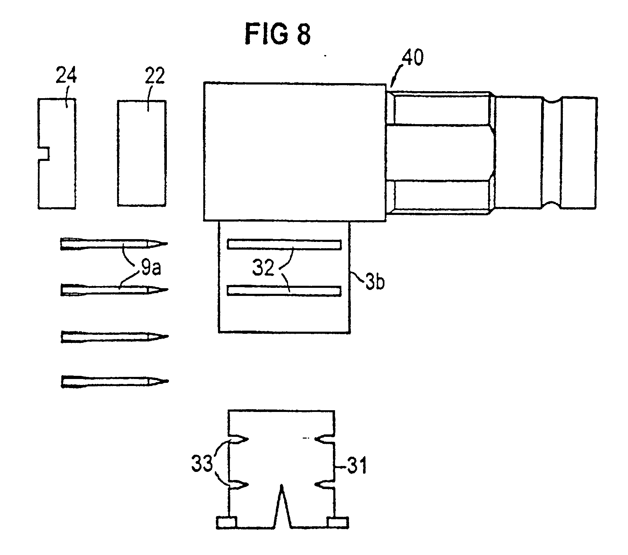

Der in den Figuren 5 und 6 für einen geraden Kabelsteckverbinder dargestellte Aufbau einer Schneidklemm-Anschlußeinrichtung kann in entsprechender Weise auch bei einem winkligen Koaxial-Kabelkuppler nach Figur 8 vorgesehen sein. Bei dieser ebenfalls mit einem Standardgehäuse 40 mit abgewinkelten Kabelanschlußstutzen 3b zum Abschluß von Koaxialkabeln unterschiedlicher Durchmesser realisierbaren Schneidklemm-Anschlußeinrichtung wird ebenfalls eine nach Figur 6 ausgebildete Adapterhülse 31 verwendet. Der Anschluß des Kabelaußenleiters erfolgt in der bereits bei den vorherigen Ausführungsformen beschriebenen Weise, z. B. mittels 4 U-förmiger kabelangepaßter Klammern 9a, während die Innenleiterverbindung dieses Kabelkupplers wie bei der Ausführungsform nach Figur 1 mit Hilfe eines Druckstückes 22 und einer Verschlußschraube 24 erfolgen kann.

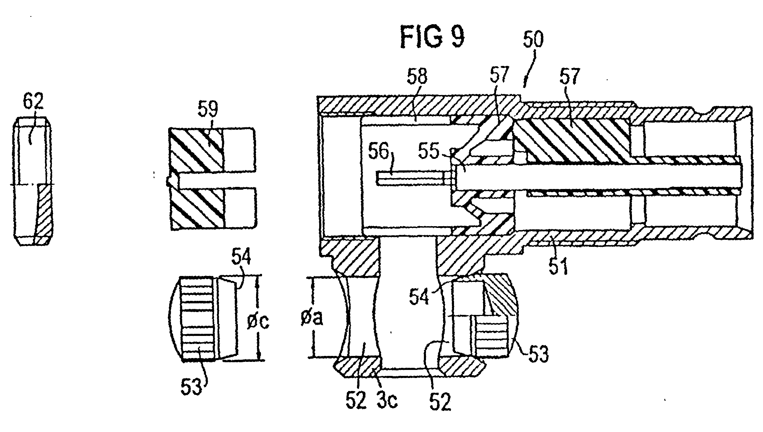

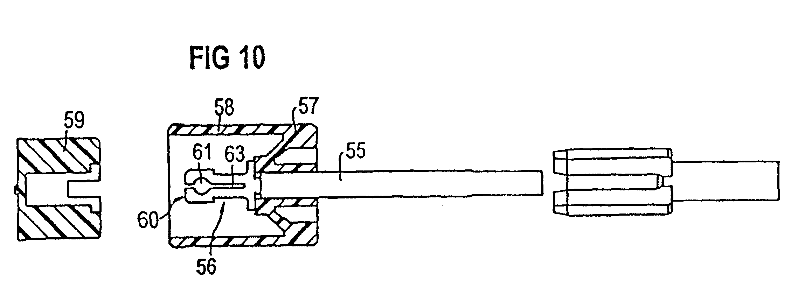

Schließlich ist in den Figuren 9 und 10 eine weitere Ausführungsform einer erfindungsgemäßen Schneidklemm-Anschlußeinrichtung bei einem winkligen koaxialen Kabelkuppler gezeigt, die sich von den bisherigen Ausführungsformen in der Art des Außenleiter- und Innenleiteranschlusses unterscheidet. Das Gehäuse 50 dieses Kabelkupplers besitzt wieder ein gerades Gehäuseteil 51 für die Innenleiterverbindung und einen abgewinkelten Kabelanschlußstutzen 3c zur Aufnahme eines nach Figur 7 vorbereiteten Kabelendes eines Koaxialkabels 6. Hier sind die Ausnehmungen des Kabelanschlußstutzens 3c für die Mittel zum Schneidklemm-Anschluß des Kabelleiters als Radialbohrungen 52 in der Wandung des Kabelanschlußstutzens ausgebildet, wobei diese Bohrungen ebenfalls quer zur Mittelachse des Kabelanschlußstutzens verlaufen, nach außen offen sind und bis zur Anschlußbohrung des Kabelanschlußstutzens reichen. Die Mittel zum Schneidklemm-Anschluß des Kabelaußenleiters 4 bestehen aus mindestens zwei am Außenumfang gerändelten, leitend ausgebildeten Klemmstöpseln 53, die von entgegengesetzten Seiten her radial in den Kabelanschlußstutzen 3c eingeführt und selbstklemmend in die Radialbohrungen 52 eingepreßt sind. Die Klemmstöpsel 53 sind an derjenigen Seite, welche dem in den Kabelanschlußstutzen 3c eingeführten Koaxialkabel zugewandt ist, ausgehöhlt und mit einer oder mehreren umlaufenden Schneidzonen 54 ausgebildet. Ferner sind die Klemmstöpsel 53 an der Außenstirnseite zur Anpassung an das zu verwendende Werkzeug abgerundet und an der gegenüberliegenden Seite z. B. konisch zulaufend ausgebildet und so gestaltet, daß beim Aufdrücken auf das Koaxialkabel bzw. beim Einschneiden der Schneidzonen 54 in den Kabelmantel und den Kabelaußenleiter eine bleibende Klemmspannung ausgeübt wird, die wiederum eine gasdichte, niedrigohmige Verbindung zwischen dem Kabelaußenleiter und den Klemmstöpseln 53 gewährleistet. Hierzu ist die spannende Passung der Schneidzonen 54 mit der Abmessung c entsprechend auf den Durchmesser a der Radialbohrungen 52 abgestimmt.

Der Innenleiteranschluß erfolgt bei der Ausführungsform nach den Figuren 9 und 10 in ähnlicher Weise wie bei der Ausführungform in den Figuren 1 und 4. Der Innenleiter 55 des geraden Gehäuseteils 51 ist wie bei Figur 4 mit einem IDC-Kontaktelement 56 verbunden oder mit diesem einteilig gestaltet und in einem ein- oder zweiteiligen Isolierteil 57 mit Buchse 58 gehalten. In die Buchse 58 ist ein aus Isoliermaterial bestehendes Druckstück 59 einsetzbar, welches auf den Kopf 60 des Kontaktelementes 56 aufschiebbar ist. Hierzu ist das Druckstück 59 in der aus den Figuren 9 und 10 ersichtlichen Weise ausgespart und geschlitzt. Bei der Kabelmontage wird das Koaxialkabel in das Gehäuse 50 bzw. dessen kabelangepaßten Anschlußstutzen 3c geschoben, wobei der Kabelinnenleiter in ein Kontaktloch 61 des Kopfes 60 des Kontaktelementes 56 gelangt. Beim Einschieben des Druckstückes 59 in die Buchse 58 und beim Anziehen einer Verschlußschraube 62 wird der Kabelinnenleiter in den Klemmschlitz 63 des Kontaktelementes 56 gedrückt. Nach dem Innenleiteranschluß werden die Klemmstöpsel 53 für den Anschluß des Kabelaußenleiters in die Radialbohrungen 52 eingesteckt und bis zum Anschlag der Klemmzangenbacken 15 am Kabelanschlußstutzen 3c und der Kontaktierung des Kabelaußenleiters eingepreßt.

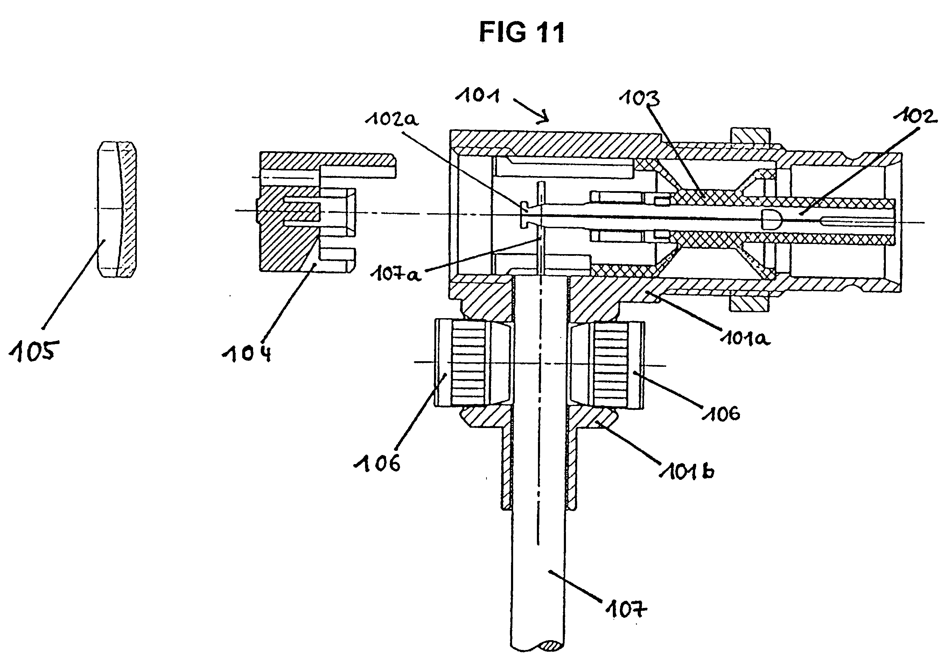

Nachfolgend wird unter Bezugnahme auf die Figur 11 ein weiterer Koaxialkabel-Winkelsteckverbinder beschrieben.

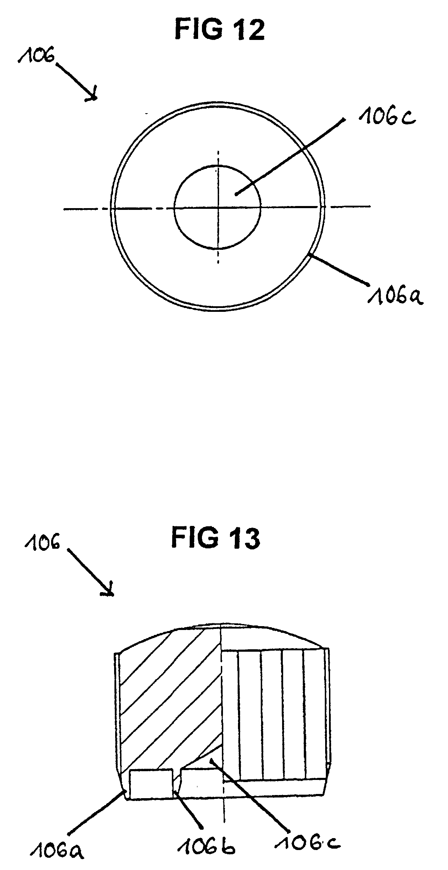

Der in der Figur 11 gezeigte Koaxialkabel-Winkelsteckverbinder umfaßt weitere Ausführungsbeispiele erfindungsgemäß ausgebildeter Schneidklemm-Anschlußeinrichtungen und ein. Ausführungsbeispiel der erfindungsgemäßen Vorrichtung zur Führung von zu verbindenden Leitern zur Schneidklemm-Anschlußeinrichtung; die erwähnten Ausführungsbeispiele werden im Anschluß unter Bezugnahme auf die Figuren 12 bis 22 beschrieben.

Der in der Figur 11 gezeigte Koaxialkabel-Winkelstecker besteht aus einem leitend ausgebildeten Gehäuse 101, z.B. einem Metallgehäuse, das ein gerades Gehäuseteil 101a und einen von diesem abgewinkelten Kabelanschlußstutzen 101b umfaßt.

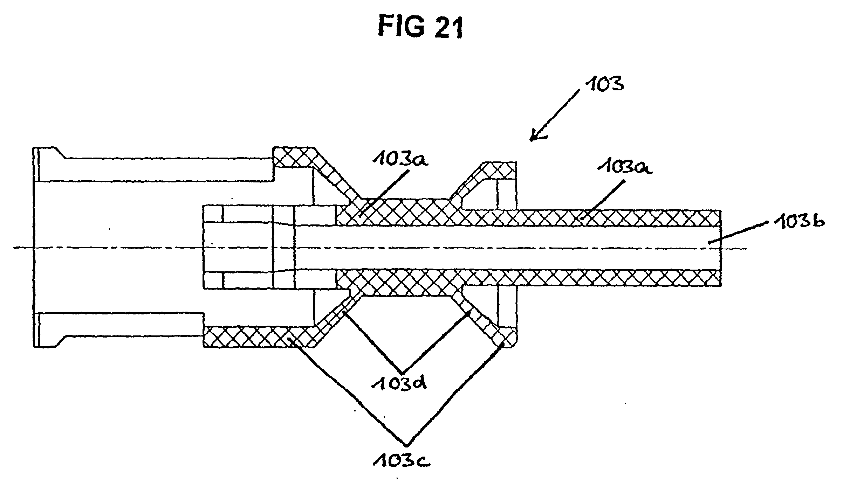

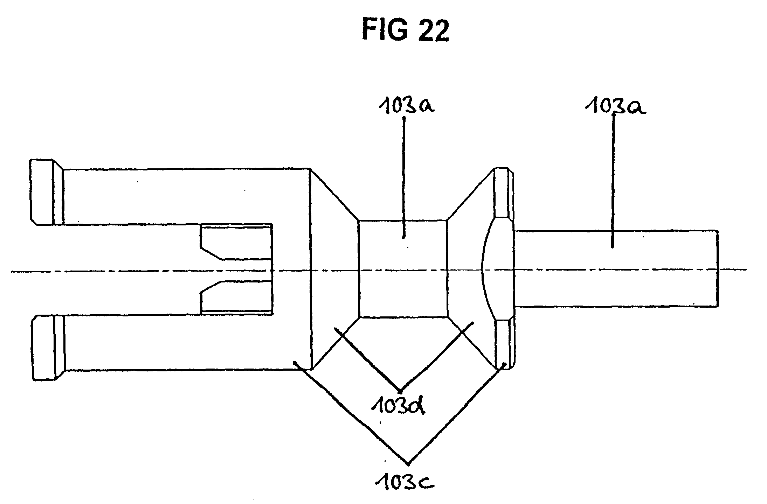

Im Inneren des geraden Gehäuseteils 101a ist eine Innenleiteranschlußbuchse 102 vorgesehen, die in einem Isolierteil 103 geführt ist, welches zur Isolierung der Innenleiteranschlußbuchse 102 vom Gehäuse 101 und zur Abstützung und Zentrierung der Innenleiteranschlußbuchse 102 innerhalb des geraden Gehäuseteils 101a dient; das Isolierteil 103, welches als die bereits erwähnte Vorrichtung zur Führung von zu verbindenden Leitern zur Schneidklemm-Anschlußeinrichtung einsetzbar ist, wird später unter Bezugnahme auf die Figuren 21 und 22 noch genauer beschrieben.

In den Kabelanschlußstutzen 101b sind zwei Schneidklemmteile in Form von Klemmstöpseln 106 aus Metall eingesteckt, welche beim Eindrücken in bzw. durch entsprechende, zur Einführung der Klemmstöpsel dienende Ausnehmungen des Kabelanschlußstutzens 101b einerseits ein in den Kabelanschlußstutzen eingeführtes Koaxialkabel 107 einklemmen und teilweise, d.h. den Außenleiter des Koaxialkabels kontaktieren, und welche hierbei andererseits selbst in den entsprechenden Ausnehmungen des Kabelanschlußstutzens eingeklemmt werden. Diese (Außenleiter-)Schneidklemm-Anschlußeinrichtung wird später unter Bezugnahme auf die Figuren 12 bis 17 noch genauer beschrieben.

In das gemäß Figur 11 linke Ende des geraden Gehäuseteils 101a ist ein vorzugsweise aus Isoliermaterial bestehendes Druckstück 104 einführbar, welches zum Zwecke der Herstellung einer elektrischen Verbindung zwischen einem vollständig abisolierten Innenleiter 107a des Koaxialkabels 107 oder einem teilweise abisolierten Innenleiter 107a des Koaxialkabels 107 (nur der Außenleiter des Koaxialkabels und dessen äußere Isolierung sind entfernt) und einem Innenleiterverbindungsabschnitt 102a der Innenleiteranschlußbuchse 102 und/oder zum Zwecke des Verschließens dieser Verbindungsstelle auf den Innenleiterverbindungsabschnitt 102a aufschiebbar ist.

Das Druckstück 104 ist mittels eines Verschlußteils in Form einer Verschlußschraube 105 oder dergleichen in das gerade Gehäuseteil 101a einführbar und gegen ein Lösen von der Verbindungsstelle sicherbar.

Der beschriebene Koaxialkabel-Winkelstecker wird an seinem gemäß der Figur 11 rechten Ende in ein entsprechendes Gegenstück eingesteckt. Dabei kommt das Gehäuse 101 elektrisch mit dem Außenleiter eines zum Gegenstück führenden Koaxialkabels in Verbindung, und die Innenleiteranschlußbuchse 102 kommt elektrisch mit dem Innenleiter des zum Gegenstück führenden Koaxialkabels in Verbindung.

Zur Herstellung einer bestimmungsgemäßen elektrischen Verbindung zwischen den zum beschriebenen Koaxialkabel-Winkelstecker und zum besagten Gegenstück führenden Koaxialkabeln ist daher die Innenleiteranschlußbuchse 102 elektrisch mit dem Innenleiter 107a des zum Koaxialkabel-Winkelstecker geführten Koaxialkabels 107 zu verbinden, und das Gehäuse 101 ist mit dem Außenleiter dieses Koaxialkabels 107 zu verbinden.

Die elektrische Verbindung zwischen der Innenleiteranschlußbuchse 102 und dem Innenleiter 107a des Koaxialkabels 107 erfolgt dadurch, daß der abisolierte Innenleiter 107a des Koaxialkabels 107 mit dem Innenleiterverbindungsabschnitt 102a des Innenleiters 102 verlötet wird oder dadurch, daß der vollständig oder teilweise (nur der Außenleiter des Koaxialkabels und dessen äußere Isolierung sind entfernt), gegebenenfalls auch überhaupt nicht abisolierte Innenleiter 107a des Koaxialkabels 107 entsprechend einem Schneidklemm-(IDC-) Verfahren mit dem Innenleiterverbindungsabschnitt 102a des Innenleiters 102 kontaktiert und verklemmt wird.

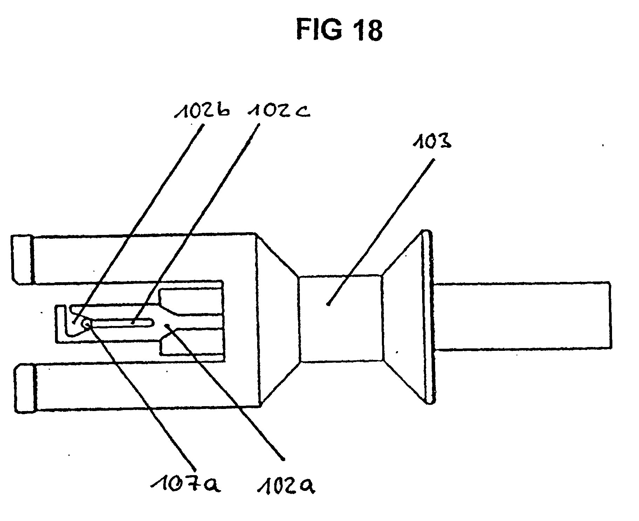

Die zur Herstellung einer Innenleiterverbindung nach dem Schneidklemmverfahren vorteilhafterweise (aber nicht zwangsläufig) zusammenwirkenden Elemente Innenleiteranschlußbuchse 102a, Druckstück 104 und Verschlußschraube 105 werden später unter Bezugnahme auf die Figuren 18 bis 20 noch genauer beschrieben.

Die elektrische Verbindung zwischen dem Gehäuse 101 des Koaxialkabel-Winkelsteckers und dem Außenleiter des Koaxialkabels 107 erfolgt mittels der vorstehend bereits erwähnten und nun detailliert beschriebenen Klemmstöpsel 106.

Durch die Klemmstöpsel 106 werden das Gehäuse 101 des Koaxialkabel-Winkelsteckers und der Außenleiter des Koaxialkabels 107 unter Verwendung des Schneidklemm-(IDC-) Vefahrens mechanisch und elektrisch verbunden.

Die Klemmstöpsel 106 sind elektrisch leitend ausgebildet und bestehen vorzugsweise aus Metall. Ihr Aufbau im einzelnen wird nachfolgend anhand der Figuren 12 bis 15 näher erläutert.

Figur 12 ist eine Draufsicht auf einen Klemmstöpsel von der dem anzuschließenden Koaxialkabel zuzuwendenden Seite.

Figur 13 ist eine teilweise geschnittene Seitenansicht eines gegenüber dem in der Figur 12 gezeigten Klemmstöpsel verändert ausgebildeten Klemmstöpsels.

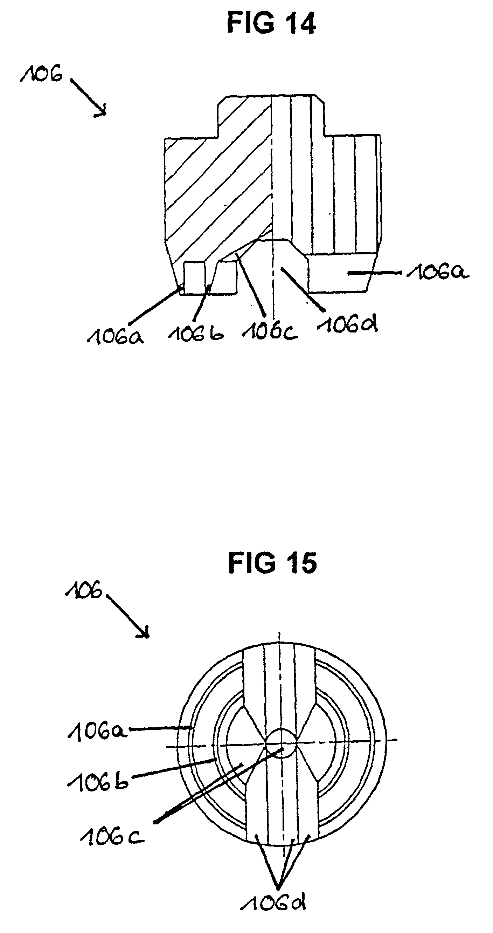

Figur 14 ist eine teilweise geschnittene Seitenansicht eines gegenüber den in den Figuren 12 und 13 gezeigten Klemmstöpseln verändert ausgebildeten Klemmstöpsels.

Figur 15 ist eine Draufsicht auf den in der Figur 14 gezeigten Klemmstöpsel von der dem anzuschließenden Koaxialkabel zuzuwendenden Seite.

Der Klemmstöpsel 106 gemäß Figur 12 weist an derjenigen Seite, welche dem in den Kabelanschlußstutzen 101b eingeführten Koaxialkabel zuzuwenden ist, eine entlang der äußeren Begrenzung umlaufende Schneidzone 106a in Form einer messerartigen Erhebung auf. Im Zentrum der in der Figur 12 gezeigten, kreisförmigen Querschnitt aufweisenden Fläche des Klemmstöpsels ist eine kegelförmige Aussparung 106c vorgesehen.

Der in der Figur 13 in einer Seitenansicht gezeigte Klemmstöpsel 106 weist im Unterschied zu dem in der Figur 12 gezeigten Klemmstöpsel zusätzlich eine zweite, vom Außenrand nach innen versetzte umlaufende Schneidzone 106b auf, welche wie die erste, äußere Schneidzone 106a ebenfalls als messerartige Erhebung ausgebildet ist.

Wie aus der Figur 13 ersichtlich ist, ist der dort gezeigte Klemmstöpsel - wiederum im Unterschied zu dem in der Figur 12 gezeigten Klemmstöpsel - zu seiner dem anzuschließenden Kabel zuzuwendenden Seite hin konisch zulaufend ausgebildet und so gestaltet, daß bei einem Aufdrücken desselben auf ein Koaxialkabel bzw. beim Einschneiden der Schneidzonen in den Kabelmantel und den Außenleiter des anzuschließenden Kabels eine bleibende Klemmspannung ausgeübt wird, welche ein gasdichte, niedrigohmige Verbindung zwischen dem Kabelaußenleiter und den Klemmstöpseln gewährleistet.

Aus der Figur 13 ist ferner ersichtlich, daß der seitliche Außenumfang des Klemmstöpsels 106 gerändelt ist.
Der Klemmstöpsel weist an der mit der Rändelung versehenen Stelle einen Außendurchmesser auf, der größer ist als der Innendurchmesser der später noch beschriebenen Ausnehmungen im Kabelanschlußstutzen zum Einführen der Klemmstöpsel, so daß der Klemmstöpsel beim Eindrücken desselben in die Ausnehmung dauerhaft festgeklemmt wird.

Wie des weiteren aus der Figur 13 ersichtlich ist, ist der Klemmstöpsel an der kabelfernen Stirnseite bzw. Außenstirnseite abgerundet, um eine Anpassung an das zum Einstecken desselben in den Kabelanschlußstutzen verwendete Werkzeug zu erreichen; anstelle der gezeigten Rundung kann in Abhängigkeit vom verwendeten Werkzeug selbstverständlich auch jede beliebige andere Ausgestaltung der entsprechenden Fläche vorgesehen werden. Die in der Figur 13 gezeigte Rundung eignet sich auch für Standard-Werkzeuge wie Zangen und dergleichen.

Die unter Bezugnahme auf die Figuren 12 und 13 beschriebene Ausbildung der kegelartigen Ausnehmung, der Außenstirnseite und der Rändelung ist, wenngleich dies nicht jeweils explizit erwähnt ist, bei allen beschriebenen Klemmstöpseln in identischer oder entsprechender weise vorgesehen.

Der Klemmstöpsel gemäß den Figuren 14 und 15 weist im Unterschied zu dem in Figur 13 gezeigten Klemmstöpsel auf der dem anzuschließenden Kabel zuzuwendenden Seite eine quer über die gesamte Fläche verlaufende Aussparung 106d auf.

Diese Aussparung 106d hat im vorliegenden Ausführungsbeispiel einen aus geraden Linienzügen zusammengesetzten, im wesentlichen aber halbkreisförmigen Querschnitt.

Auf diese Querschnittsgestaltung der Aussparung 106d besteht jedoch keine Einschränkung. Entscheidend ist hierbei lediglich, daß die Aussparung 106d einen Teil des anzuschließenden Kabels in sich aufzunehmen vermag.

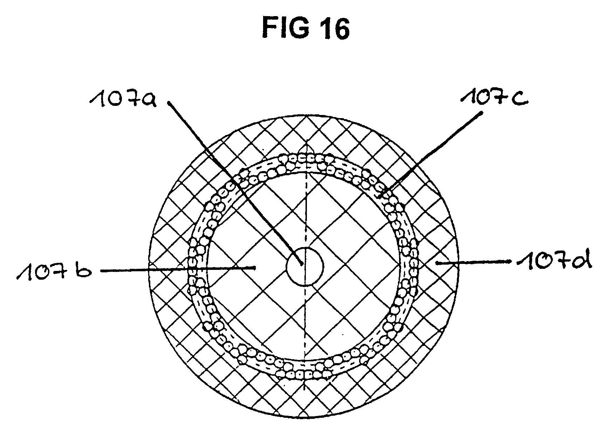

Die Breite der Aussparung 106d ist hierzu vorzugsweise so bemessen, daß diese wesentlich größer als der Durchmesser des Innenleiters 107a, aber etwas geringer als der Innendurchmesser des Kabelaußenleiters 107c ist (siehe Figur 16).

Im Bereich der Ausnehmung sind bei dem Klemmstöpsel gemäß Fig. 13 vollständig umlaufenden Schneidzonen 106a und 106b unterbrochen.

Um die beschriebenen Klemmstöpsel bestimmungsgemäß in Kontakt mit dem anzuschließenden Koaxialkabel bringen zu können, weist der Kabelanschlußstutzen 101b, wie vorstehend bereits erwähnt, Ausnehmungen zum Einstecken der Klemmstöpsel 106 auf.

Die Ausnehmungen sind als quer zur Mittelachse des Kabelanschlußstutzens 101b verlaufende Ausnehmungen ausgebildet, die nach außen offen sind und von der Außenoberfläche des Kabelanschlußstutzens bis zu der das anzuschließende Kabel aufnehmenden Anschlußbohrung des Kabelanschlußstutzens reichen. Mit anderen Worten ausgedrückt handelt es sich dabei um durch die Wandung des innen hohlen Kabelanschlußstutzens verlaufende Radialbohrungen.

Bei der Herstellung des Schneidklemm-Anschlusses wird zunächst das Koaxialkabel 107 in den Kabelanschlußstutzen 101b eingeführt.

Dieses Koaxialkabel 107 wird nachfolgend unter Bezugnahme auf Figur 16 beschrieben.

Figur 16 ist eine Querschnittsansicht des in den Kabelanschlußstutzen 101b einzuführenden Koaxialkabels.

Das Koaxialkabel weist in der Reihenfolge von innen nach außen folgende Bestandteile auf: Den Kabelinnenleiter 107a, eine Innenisolierung 107b, den Kabelaußenleiter 107c, und eine Außenisolierung 107d.

Der Kabelaußenleiter ist dabei als aus Litzendrähten zusammengesetztes Schirmgeflecht ausgebildet.

Nach dem Einführen des Koaxialkabels 107 in den Kabelanschlußstutzen 101a werden gemäß dem vorliegenden Ausführungsbeispiel zwei Klemmstöpsel von gegenüberliegenden Seiten des Kabelanschlußstutzens in die entsprechend angeordneten Bohrungen eingedrückt.

Wie aus der vorhergehenden Beschreibung ersichtlich ist, sind der Klemmstöpsel 106 und der Kabelanschlußstutzen 101b so ausgebildet, angeordnet und bemessen, daß zum Eindrücken des Klemmstöpsels in den Kabelanschlußstutzen keinerlei Spezialwerkzeug erforderlich ist, sondern eine handelsübliche Zange oder dergleichen verwendet werden kann.

Beim Eindrücken der Klemmstöpsel 106 in den Kabelanschlußstutzen 101b wird durch die Schneidzonen der Klemmstöpsel die Außenisolierung 107d des Koaxialkabels 107 aufgeschnitten, bis die Schneidzonen 106a und 106b schließlich in Kontakt mit dem Kabelaußenleiter 107c gelangen.

Mit dem Erreichen des Kabelaußenleiters durch die Schneidzonen der Klemmstöpsel oder eine vorbestimmte Bewegungsstrecke später kommt die Rändelung der Klemmstöpsel 106 in Eingriff mit den jeweiligen Bohrungen im Kabelanschlußstutzen, so daß die Klemmstöpsel 106 in den jeweiligen Bohrungen festgeklemmt werden.

Da die Klemmstöpsel aus elektrisch leitendem Material wie Metall oder dergleichen bestehen, ist damit eine sichere elektrische Verbindung zwischen dem Kabelaußenleiter und dem Gehäuse des Koaxialkabel-Winkelsteckers gewährleistet.

In diesem Zustand ist das angeschlossene Koaxialkabel zwischen den von gegenüberliegenden Seiten des Kabelanschlußstutzens eingesteckten Klemmstöpseln eingeklemmt.

Die Art des Einklemmens ist dabei jedoch von der verwendeten Ausführungsform des Klemmstöpsels abhängig.

Bei Verwendung der Klemmstöpsel gemäß den Figuren 12 und 13 mit der rundum laufenden Schneidzone können sich die einander gegenüberliegenden Schneidzonen der zwei Klemmstöpsel bis auf einen Abstand nähern, der in etwa dem Außendurchmesser des Kabelaußenleiters oder etwas weniger entspricht. Ein darüber hinaus gehendes Zusammendrücken ist nach Möglichkeit zu vermeiden, da andernfalls der Kabelaußenleiter durch die Schneidzonen der Klemmstöpsel zerschnitten werden könnte.

Bei Verwendung der Klemmstöpsel gemäß den Figuren 14 und 15 können sich die einander gegenüberliegenden Schneidzonen der zwei Klemmstöpsel bis auf einen Abstand nähern, der in etwa dem Durchmesser der den Kabelaußenleiter bildenden Litzendrähte entspricht.

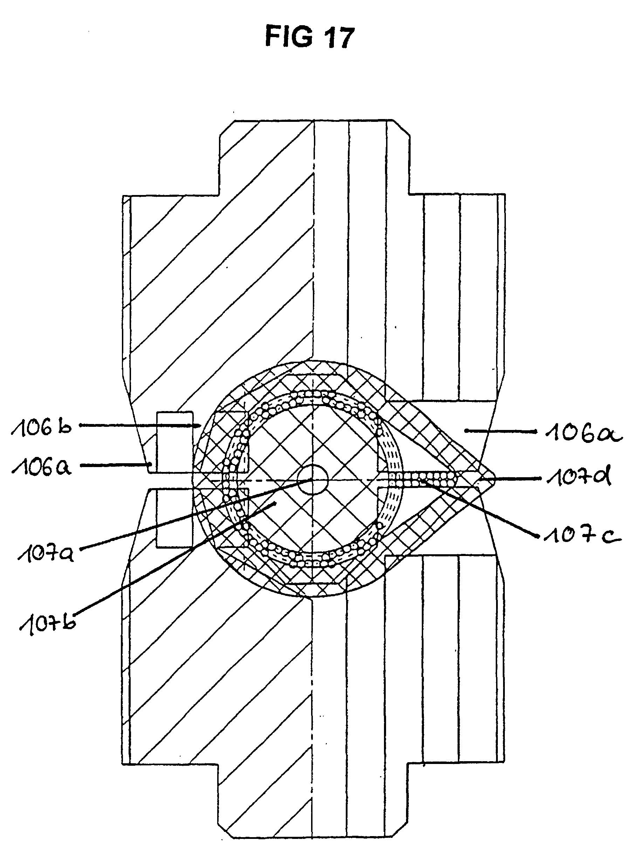

Dies wird nachfolgend anhand der Figur 17 detailliert erläutert.

Die Figur 17 zeigt ein zwischen zwei Klemmstöpseln gemäß den Figuren 14 und 15 eingeklemmtes Koaxialkabel.

Wie aus Figur 17 ersichtlich ist, wird der größte Teil des Koaxialkabels in den jeweiligen, einander gegenüberliegenden nutenartigen Aussparungen 106d der Klemmstöpsel aufgenommen.

Innerhalb der Aussparungen 106d der Klemmstöpsel befinden sich, wie vorstehend bereits erwähnt, keine Schneidzonen. Der in den Aussparungen 106d der Klemmstöpsel aufgenommene zentrale Abschnitt des Koaxialkabels kann also unabhängig vom gegenseitigen Abstand der beiden Klemmstöpsel nicht durch ein (zu weites) Einschneiden der Schneidzonen beschädigt werden.

Im Gegensatz hierzu werden die nicht in der Aussparungen 106d aufgenommenen seitlichen Abschnitte des Koaxialkabels durch die benachbart zu den Aussparungen 106d längs des Randes der Klemmstöpsel vorgesehenen Schneidzonen 106a und 106b aufgeschnitten.

Bei einem derartigen Aufschneiden der seitlichen Abschnitte des Koaxialkabels wird wie üblich zunächst die Außenisolierung 107d durchschnitten. Nach dem Durchschneiden der Außenisolierung kommen die Schneidzonen wiederum in Kontakt mit dem Kabelaußenleiter 107c. Dieser wird hier jedoch bei weiterem Eindrücken der Klemmstöpsel nicht zerschnitten, weil er an dieser seitlichen Stelle in Einpreßrichtung der Klemmstöpsel verschoben werden kann.

Der Endzustand einer auf diese Weise hergestellten Verbindung ist aus der rechten Hälfte der Figur 17 ersichtlich. Die ursprünglich gleichmäßig über den Umfang des Koaxialkabels verteilten Litzendrähte sind auf einen zwischen den Schneidzonen 106a und 106b der gegenüberliegenden Klemmstöpsel liegenden großflächigen dünnen Bereich zusammengeschoben; die Kabelaußenisolierung ist entsprechend deformiert.

Wie ebenfalls aus der rechten Hälfte der Figur 17 ersichtlich ist, ergibt sich bei dieser Art der Schneidklemm-Anschlußherstellung eine sehr großflächige Kontaktierung zwischen den Klemmstöpseln und dem Kabelaußenleiter. Die auf diese Weise hergestellte elektrische Verbindung ist damit von höchster Qualität.

Auf die beschriebene Weise wurde somit eine Schneidklemm-Anschlußeinrichtung geschaffen, die ohne großen zusätzlichen Herstellungsaufwand einen derart einfachen und sicheren Anschluß vor allem des Kabelaußenleiters gewährleistet, daß dieser ohne spezielle Werkzeuge schnell und sicher auch von weniger qualifizierten Monteuren oder Nicht-Fachleuten zu bewerkstelligen ist.

Wenngleich die Erfindung vorstehend anhand eines ganz konkreten Ausführungsbeispieles beschrieben wurde, ist diese nicht hierauf beschränkt, sondern kann auf unterschiedlichste Art und Weise modifiziert werden.

So muß das anzuschließende Koaxialkabel nicht zwangsläufig zwischen zwei einander gegenüberliegenden Klemmstöpseln eingeklemmt werden. Es können vielmehr beliebig viele aus beliebigen Richtungen auf das Koaxialkabel zulaufende Klemmstöpsel verwendet werden; auch die Verwendung von nur einem einzigen Klemmstöpsel wäre bei entsprechend tiefer Ausbildung der nutenartigen Aussparung 106d denkbar. Des weiteren ist es möglich, die Klemmstöpsel mit einem vom kreisrunden Querschnitt abweichenden Querschnitt auszubilden. Dies eröffnet die Möglichkeit, eine vorbestimmte Orientierung der nutenartigen Aussparung innerhalb des Kabelanschlußstutzens vorzugeben und damit Beschädigungen des anzuschließenden Koaxialkabels zu vermeiden.

Nachfolgend werden nun unter Bezugnahme auf die Figuren 11 und 18 bis 20 der Innenleiterverbindungsabschnitt 102a, das Druckstück 104 und die Verschlußschraube 105 näher beschrieben.

Diese Elemente dienen dazu, einen ersten elektrischen Leiter (im vorliegenden Ausführungsbeispiel in Form der Innenleiteranschlußbuchse 102 des Koaxialkabel-Winkelsteckers) mit einem zweiten elektrischen Leiter (im vorliegenden Ausführungsbeispiel in Form des Innenleiters 107a des zum Koaxial-Winkelsteckers führenden Koaxialkabels 107) elektrisch nach dem Schneidklemmverfahren zu verbinden.

Der Innenleiterverbindungsabschnitt 102a ist ein speziell zur mechanischen und elektrischen Verbindung des Innenleiters 107a des Koaxialkabels 107 mit der Innenleiteranschlußbuchse 102 ausgebildetes Element; er kann einstückig zusammen mit der Innenleiteranschlußbuchse 102 ausgebildet oder als separates Teil auf beliebige Weise mit der Innenleiteranschlußbuchse 102 verbunden sein.

Der Innenleiterverbindungsabschnitt 102a ist in der Figur 18 vergrößert und aus einer gegenüber der Figur 11 veränderten Ansicht dargestellt.

Figur 18 ist eine gemäß Figur 11 von oben gesehene Ansicht des dort gezeigten Koaxialkabel-Winkelsteckverbinders unter Weglassung dessen Gehäuses.

Wie aus der Figur 18 ersichtlich ist, weist der Innenleiterverbindungsabschnitt 102a eine Ausnehmung 102b und einen sich seitlich daran anschließenden Schlitz 102c auf.

Sowohl die Ausnehmung 102b als auch der Schlitz 102c erstrecken sich vollständig durch den gesamten Innenleiterverbindungsabschnitt 102a hindurch, d.h. von einer Seite des Innenleiterverbindungsabschnittes 102a bis zu dessen gegenüberliegender Seite.

Die Ausnehmung 102b ist derart ausgebildet und bemessen, daß der in der Figur 18 ebenfalls dargestellte Innenleiter 107a des Koaxialkabels 107 problemlos, d.h. im wesentlichen widerstandslos in diese eingeführt werden kann; eine derart problemlose Einführung ist auch dann möglich, wenn die zwischen Innenleiter und Außenleiter des Koaxialkabels 107 vorgesehene Isolierschicht nicht abisoliert ist.

Die Ausnehmung 102b ist ferner derart ausgebildet, daß sie sich zum Schlitz 102c hin allmählich verengt, d.h. kontinuierlich in den Schlitz übergeht.

Der Schlitz 102c ist derart ausgestaltet, daß dessen Breite geringer ist als der Außendurchmesser des abisolierten Innenleiters 107a des Koaxialkabels 107. Die den Schlitz bildenden Schlitzbacken sind so robust ausgebildet, daß diese sich beim Einpressen des Innenleiters 107a in denselben einschneiden und dabei nicht nachgeben, sondern ihre ursprüngliche Stellung zueinander im wesentlichen unverändert beibehalten. Dies ist auch dann der Fall, wenn ein nicht oder nur teilweise abisolierter Innenleiter eingepreßt wird, wobei die Schlitzbacken in diesem Fall zusätzlich auch die Isolation bis hin zum Innenleiter aufschneiden.

Der Innenleiterverbindungsabschnitt 102a hat, wenngleich dies aus den Figuren nicht ersichtlich ist, einen hohlzylindrischen Querschnitt; die Ausnehmung 102b und der Schlitz 102c erstrecken sich dabei durch beide einander gegenüberliegende Abschnitte der Wandung.

Bei der Herstellung der elektrischen und mechanischen Verbindung zwischen dem Innenleiter 107a und dem Innenleiterverbindungsabschnitt 102a wird zunächst das Koaxialkabel 107 mit dem ganz oder teilweise abisolierten Innenleiter 107a in den Kabelanschlußstutzen 101b eingeführt.

Dabei wird der ganz oder teilweise abisolierte Innenleiter 107a, sofern er ausreichend weit aus dem Koaxialkabel 107 herausragt, automatisch durch die entsprechend positionierte Ausnehmung 102b des Innenleiterverbindungsabschnittes 102a geführt bzw. in diese eingefädelt. Wie in Figur 11 gezeigt ist, kann das freie Ende des Innenleiters 107a dabei beträchtlich aus der koaxialkabelfernen Seite des Innenleiterverbindungsabschnittes 102a herausragen.

In diesem Zustand werden die, wie in Figur 11 gezeigt vormontierten Klemmstöpsel 106 mittels eines geeigneten Werkzeuges wie einer Zange oder dergleichen in den Kabelanschlußstutzen 101b eingedrückt. Dabei wird, wie vorstehend bereits beschrieben, eine sichere mechanische und teilweise elektrische Verbindung zwischen dem Kabelanschlußstutzen 101b und dem Koaxialkabel 107 hergestellt.

Bei diesem Vorgang wird das Koaxialkabel 107 deformiert und unter Umständen asymmetrisch wirkenden Kräften ausgesetzt, die gegebenenfalls auch eine Bewegung des aus dem Koaxialkabel 107 hervorstehenden Innenleiters 107a bewirken können.

Die seitliche Bewegungsfreiheit des Innenleiters 107a ist jedoch durch die Ausnehmung 102b des Innenleiterverbindungsabschnittes 102a derart eingeschränkt, daß der Innenleiter 107a zwar innerhalb der Ausnehmung 102b bewegbar ist, diese aber nicht verlassen kann.

Abschließend wird das Druckteil 104 von der gemäß Figur 11 linken Seite des geraden Gehäuseteils 101a in das Gehäuse eingeführt.

Das Druckteil 104 ist speziell dazu ausgebildet, den in die Ausnehmung 102b eingeführten Innenleiter 107a des Koaxialkabels 107 in den Schlitz 102c zu pressen.

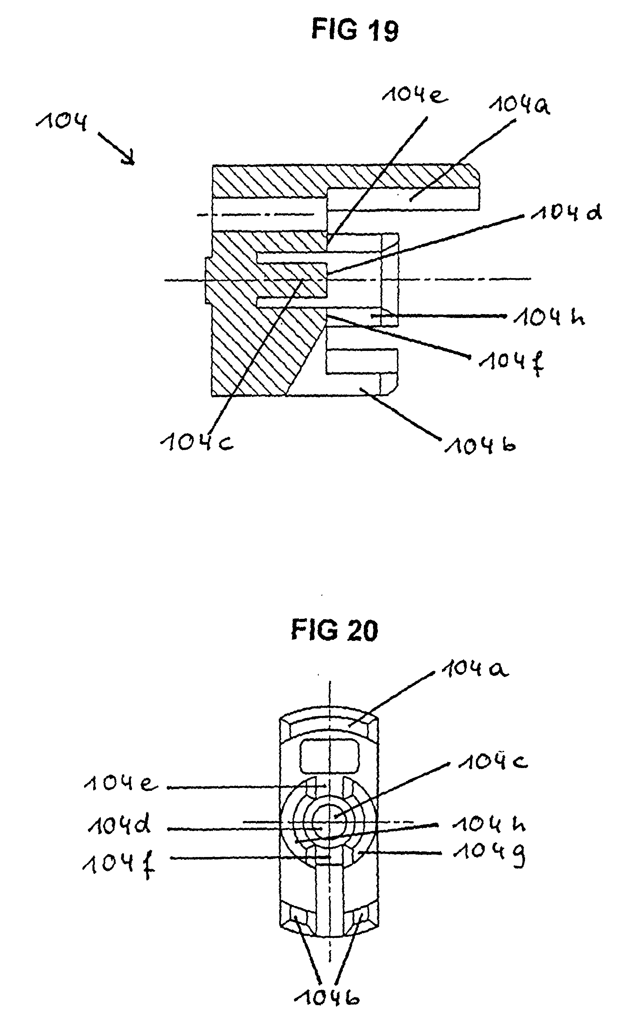

Das Druckteil 104 wird nachfolgend anhand der Figuren 19 und 20 beschrieben.

Figur 19 ist eine vergrößerte Ansicht des bereits in Figur 11 gezeigten Druckteils 104.

Figur 20 ist eine gemäß Figur 19 von rechts gesehene Ansicht des dort gezeigten Druckteils.

Das Druckteil 104 weist obere und untere Führungsstege 104a und 104b auf, welche beim Einführen des Druckstücks 104 in das Gehäuse 101 des Koaxialkabel-Winkelsteckers mit entsprechenden Gegenstücken des Steckers in Eingriff kommen und verhindern helfen, daß das Druckstück 104 in einer nicht vorgesehenen Orientierung in den Koaxialkabel-Winkelstecker eingeführt wird.

Das Druckstück 104 weist ferner eine zylinderförmiges Preßelement 104c mit einer stirnseitigen mittleren frontalen Preßfläche 104d auf. Der Außendurchmesser des zylindrischen Preßelementes 104c entspricht in etwa dem Innendurchmesser des hohlzylindrischen Innenleiterverbindungsabschnittes 102a, so daß es beim Einführen des Druckstücks 104 in den Koaxialkabel-Winkelsteckverbinder automatisch in den hohlzylindrischen Innenleiterverbindungsabschnitt 102a gelangt und dort mit seiner mittleren Preßfläche 104d in Kontakt mit dem durch den Innenleiterverbindungsabschnitt 102a hindurchgeführten Innenleiter 107a kommt.

An dem gemäß der Figur 19 oberhalb des Preßelements 104c liegenden Abschnitt des Druckstücks 104 ist eine obere Preßfläche 104e vorgesehen, welche beim Einführen des Druckstücks 104 in den Koaxialkabel-Winkelsteckverbinder automatisch in Kontakt mit dem gemäß Figur 11 nach oben aus dem Innenleiterverbindungsabschnitt 102a herausragenden Abschnitt des Innenleiters 107a kommt.

An dem gemäß der Figur 19 unterhalb des Preßelements 104c liegenden Abschnitt des Druckstücks 104 ist eine untere Preßfläche 104f vorgesehen, welche beim Einführen des Druckstücks 104 in den Koaxialkabel-Winkelsteckverbinder automatisch in Kontakt mit dem gemäß Figur 11 unterhalb des Innenleiterverbindungsabschnitts 102a verlaufenden Abschnitt des Innenleiters 107a kommt.

Die mittlere Preßfläche 104d, die obere Preßfläche 104e und die untere Preßfläche 104f liegen in ein- und derselben Ebene und kommen beim Einführen des Druckstücks 104 in den Koaxialkabel-Winkelsteckverbinder mehr oder weniger gleichzeitig an drei auf einer Linie liegenden, eng benachbarten Stellen in Kontakt mit dem Innenleiter 107a.

Beim Einführen des Druckstücks 104 in den Koaxialkabel-Winkelsteckverbinder gelangt die Wandung des hohlzylindrisch ausgebildeten Innenleiterverbindungsabschnittes 102a einschließlich der in den gemäß Figur 11 im oberen und im unteren Abschnitt der Wandung vorgesehenen Ausnehmungen und Schlitze in eine um das zylindrische Preßelement 104c herum im Druckteil 104 vorgesehene zylindermantelartige Aussparung.

Eine derartige Anordnung ermöglicht es, daß das Einpressen des Innenleiters 107a in die in den gemäß Figur 11 oberen und unteren Wandungen des Innenleiterverbindungsabschnittes 102a vorgesehenen Schlitze ohne Deformierungen des Innenleiters 107a bezüglich der Eindruckrichtung erfolgen kann.

Damit auch Deformierungen des Innenleiters 107a senkrecht zur Eindruckrichtung ausgeschlossen sind, weist das Druckteil zwei rechts und links benachbart zu den übereinander liegenden Preßflächen angeordnete Begrenzungselemente in Form von vorstehenden Halbschalen 104g und 104h auf, zwischen denen der Innenleiter 107a beim Eindrücken des Druckstücks 104 in den Koaxialkabel-Winkelstecker zu liegen kommt und welche die Bewegungsfreiheit des Innenleiters 107a quer zur Eindruckrichtung einschränken.

Aufgrund der Tatsache, daß der Außendurchmesser des zylindrischen Preßelements 104c des Druckteils 104 in etwa dem Innendurchmesser des hohlzylindrischen Innenleiterverbindungsabschnittes 102a entspricht und daß auch die oberen und unteren Preßflächen 104e und 104f ausreichend groß bemessen sind, und ferner aufgrund der Tatsache, daß die Ausnehmung 102b des Innenleiterverbindungsabschnittes 102a allmählich in den Schlitz 102c übergeht, wird der Innenleiter 107a völlig unabhängig von dessen Position innerhalb der Ausnehmung 102b durch sämtliche Preßflächen 104d, 104e, 104f stets zuverlässig erfaßt und bestimmungsgemäß (gegebenenfalls unter seitlicher Führung durch die Begrenzungsflächen der Aussparung 102b) in den Schlitz 102c eingedrückt. Ein Verfehlen des Innenleiters 107a durch die Preßflächen, ein Verkanten des Innenleiters beim Eindrücken, und/oder ein nicht ordnungsgemäßes Eindrücken des Innenleiters in den Schlitz 102c sind damit ausgeschlossen.

Dadurch, daß die Breite des Schlitzes 102c geringer ist als der Durchmesser des Innenleiters 107a, wird der Innenleiter unter Deformierung desselben in den Schlitz eingepreßt und damit mechanisch und elektrisch dauerhaft fest mit diesem verbunden.

Zum Einpressen des Innenleiters 107a in den Schlitz 102c ist eine nicht unerhebliche Kraft erforderlich. Diese Kraft kann mit Hilfe der Verschlußschraube 105 aufgebracht werden, d.h. das Einführen des Druckstücks 104 in den Koaxialkabel-Winkelstecker kann durch das Einschrauben der Verschlußschraube in das Gehäuse des Koaxialkabel-Winkelsteckers bewerkstelligt werden, so daß hierfür keinerlei spezielle Werkzeuge erf orderlich sind.

Wenngleich die Innenleiterverbindung vorstehend anhand eines ganz konkreten Ausführungsbeispieles beschrieben wurde, ist diese nicht hierauf beschränkt, sondern kann auf unterschiedlichste Art und Weise modifiziert werden.

So muß der Innenleiterverbindungsabschnitt 102a weder zylindrisch noch innen hohl ausgebildet sein; er kann vielmehr jede beliebige Form annehmen, solange nur die Ausnehmung und der Schlitz in der zuvor beschriebenen Weise darin vorgesehen werden können. Das Druckstück ist in diesem Fall natürlich entsprechend den veränderten Gegebenheiten anzupassen.

Die Ausnehmung 102b muß auch nicht die in den Figuren gezeigte tropfenartige Form haben, sondern kann vielmehr jede beliebige Form aufweisen, wobei sich jedoch eine Verengung der Ausnehmung zum Schlitz hin vorteilhaft auswirkt.

Die Ausnehmung muß selbstverständlich auch nicht die in den Figuren gezeigte, aus fertigungstechnischen Gründen vorgesehene seitliche Öffnung aufweisen.

Abgesehen davon besteht auch keine Einschränkung darauf, daß die zu verbindenden elektrischen Leiter die angegebenen Teile von Steckern oder Verbindern sind; es kann sich vielmehr um zu beliebigen Zwecken dienende und beliebig ausgestaltete elektrische Leiter handeln.

Darüber hinaus muß es sich bei den Preßflächen 104d, 104e und 104f abweichend von der Darstellung in den Figuren nicht zwangsläufig um ebene Flächen handeln; die Preßflächen können vielmehr auch (beispielsweise konkav) gekrümmt sein, um den Innenleiter beim Eindrücken des Druckteils in den Koaxialkabel-Winkelstecker innerhalb der Preßflächen so zu positionieren, daß ausgehend von dieser exakt definierten Ausgangslage eine noch zuverlässigere Hinführung des Innenleiters zum Schlitzanfang gewährleistet ist.

Abschließend wird nun das in der Figur 11 gezeigte Isolierteil 103 näher beschrieben.

Das Isolierteil 103 dient, wie vorstehend bereits erwähnt, zur Führung, d.h. zur Abstützung und Zentrierung eines Innenleiters (im vorliegenden Ausführungsbeispiel in Form einer Innenleiteranschlußbuchse 102 eines Koaxialkabel-Winkelsteckers) in einem Außenleiter (im vorliegenden Ausführungsbeispiel in Form eines Gehäuses 101 eines Koaxialkabel-Winkelsteckers). Gleichzeitig hat es - wie der Name schon sagt - die Funktion, den Innenleiter und den Außenleiter elektrisch voneinander zu isolieren.

Das Isolierteil 103 ist in den Figuren 21 und 22 vergrößert dargestellt.

Figur 21 zeigt eine vergrößerte Schnittansicht des das erfindungsgemäße Isolierteil umfassenden Abschnittes des in Figur 11 gezeigten Koaxialkabel-Winkelsteckverbinders.

Figur 22 zeigt eine gemäß Figur 21 von oben gesehene Ansicht des dortgezeigten Abschnitt des Koaxialkabel-Winkelsteckverbinders.

Das hier interesssierende Isolierteil 103 bzw. der hier interessierende Abschnitt des Isolierteils 103 ist in der Figur 21 geschnitten (schraffiert) dargestellt.

Wie insbesondere aus Figur 21 ersichtlich ist, weist das Isolierteil 103 einen Innenleiter-Aufnahmeabschnitt 103a zur Aufnahme des in den Figuren 21 und 22 nicht gezeigten Innenleiters auf. Der Innenleiter-Aufnahmeabschnitt 103a weist in seinem Zentrum eine durchgehende Öffnung 103b zur Aufnahme des Innenleiters auf; er ist in etwa hohlzylindrisch ausgebildet. Im fertig montierten Zustand wird der Innenleiter durch den Innenleiter-Aufnahmeabschnitt 103a unter vollflächiger Berührung desselben vollständig ringartig umschlossen.

Vom Innenleiter-Aufnahmeabschnitt 103a erstrecken sich zum Außenleiter hin Stützzonen 103c, welche dazu dienen, daß das Isolierteil 103 und der von diesem aufgenommene Innenleiter innerhalb des in den Figuren 21 und 22 nicht gezeigten Außenleiters zentriert abgestützt werden.

Die Stützzonen 103c verlaufen schräg vom Innenleiter-Aufnahmeabschnitt zum Außenleiter, d.h. bezüglich der Oberflächennormalen des Innenleiters (im vorliegenden Ausführungsbeispiel zusammenfallend mit der Oberflächennormalen des Innenleiter-Aufnahmeabschnittes 103a) zur Axialrichtung des Innenleiters (im vorliegenden Ausführungsbeispiel zusammenfallend mit der Axialrichtung des Innenleiter-Aufnahmeabschnittes und der Axialrichtung des Isolierteiles) hin bzw. von dieser Richtung weg geneigt.

Die Schrägen 103d der Stützzonen 103c sind vom Innenleiter-Aufnahmeabschnitt 103a zum Außenleiter verlaufende, koaxial zum Innenleiter ausgebildete kegelstumpfartige, vorzugsweise kegelmantelartige Verdickungen des Innenleiter-Aufnahmeabschnitts 103a bzw. von diesen abgehende Fortsätze. Der Bereich zwischen dem Innenleiter-Aufnahmeabschnitt 103a und den Stützzonen 103c ist vorzugsweise, aber nicht zwangsläufig zumindest teilweise hohl ausgebildet (siehe Figuren 11 und 21).

Die Schrägen 103d der Stützzonen 103c gehen schließlich in parallel zur Innenfläche des Außenleiters verlaufende Abschnitte über.

Die Schrägen 103d und die sich daran anschließenden parallelen Abschnitte sind so ausgestaltet und bemessen, daß das aus dem Innenleiter-Aufnahmeabschnitt 103a und den Stützzonen 103c bestehende Isolierteil 103 passend in den Außenleiter einführbar ist.

Der Innenleiter-Aufnahmeabschnitt 103a und die hierzu koaxial vorgesehenen kegelstumpfartigen oder kegelmantelartigen Stützzonen 103c sind innerhalb senkrecht zum Innenleiter verlaufender Schnittebenen jeweils vollkommen, d.h. sowohl bezüglich des Innenleiters als auch bezüglich beliebiger Radiallinien symmetrisch ausgebildet; sie sind vorzugsweise einstückig als eine Einheit ausgebildet.

Durch das Vorsehen von Schrägen und die vollkommen symmetrische Ausbildung weist das Isolierteil weder in Umfangsrichtung noch in Axialrichtung Sprungstellen auf, an denen eine abrupte Änderung des pro Volumeneinheit zwischen dem Innenleiter und dem Außenleiter vorgesehenen Anteils an Isolationsmaterial auftreten kann.

Bildet man, wie in Figur 21 schematisch angedeutet ist, in axialen Abschnitten, in denen eine Stützzone 103c vorhanden ist, den Innenleiter-Aufnahmeabschnitt 103a dünner aus als an Stellen, wo dies nicht der Fall ist, so kann sogar erreicht werden, daß das Isolierteil über seine gesamte Länge pro Axialrichtungsabschnitt eine im wesentlichen gleichbleibende Menge an Isoliermaterial zwischen Innenleiter und Außenleiter aufweist, was eine zusätzliche Homogenisierung und eine Erleichterung der Handhabbarkeit der elektrischen Eigenschaften des aus Innenleiter und Außenleiter bestehenden elektrischen Leiters zur Folge hat.

Durch entsprechende Auswahl des zur Herstellung des Isolierteils verwendeten Isoliermaterials, durch entsprechende Festlegung der pro Axialrichtungsabschnitt des Isolierteils verwendeten Isoliermaterialmenge und eine entsprechende örtliche Verteilung des Isoliermaterials innerhalb des Isolierteils ist es damit möglich, die elektrischen Eigenschaften der aus Innenleiter und Außenleiter bestehenden elektrischen Leitung wie den Wellenwiderstand und dergleichen einfach und dennoch ortsunabhängig, zuverlässig und gleichbleibend genau auf einen gewünschten Wert, beispielsweise auf die bei Koaxialkabeln üblichen 75 Ohm einzustellen.

Wenngleich die Erfindung vorstehend anhand eines ganz konkreten Ausführungsbeispieles beschrieben wurde, ist diese nicht hierauf beschränkt, sondern kann auf unterschiedlichste Art und Weise modifiziert werden.

So muß die Anzahl der vorgesehenen Stützzonen 103c entgegen der Darstellung in den Figuren nicht unbedingt zwei betragen, sondern kann vielmehr je nach den vorliegenden Gegebenheiten, insbesondere in Abhängigkeit von der Länge des Isolierteils auf einen beliebigen Wert festgesetzt werden.

Ferner müssen die Schrägen 103d der jeweiligen Stützzonen 103c vom Innenleiter-Aufnahmeabschnitt entgegen der Darstellung in den Figuren nicht unbedingt gerade weglaufen, sondern können vielmehr beliebig gekrümmt sein.

Darüber hinaus ist das beschriebene Vorsehen von bezüglich der Oberflächennormalen des Innenleiters geneigt verlaufenden Flächenabschnitten der Stützzonen nicht auf Neigungen zur Axialrichtung des Isolierteils hin bzw. von der Axialrichtung des Isolierteils weg beschränkt, sondern die Neigung kann stattdessen oder zusätzlich hierzu auch zu der auf der Oberflächennormalen und der Axialrichtung senkrecht stehenden Richtung hin bzw. von dieser Richtung weg erfolgen.

Abgesehen davon besteht auch keine Einschränkung darauf, daß der Innenleiter und der Außenleiter die angegebenen Teile von Steckern oder Verbindern sind; es kann sich vielmehr um zu beliebigen Zwecken dienende Innenleiter und Außenleiter in beliebigen Vorrichtungen, auch um Innenleiter und Außenleiter eines Koaxialkabels handeln.

## Patentansprüche

1. Schneidklemm-Anschlußeinrichtung für Koaxialkabel, mit einem leitend ausgebildeten Gehäuse (1) mit Kabelanschlußstutzen (3) und Mitteln (9 bzw. 17, 18) für den Schneidklemm-(IDC-)Anschluß des Kabelaußenleiters (4),
**dadurch gekennzeichnet,**
**daß** der Kabelanschlußstutzen (3) mit mindestens einer quer zu seiner Mittelachse verlaufenden, nach außen offenen Ausnehmung (13) zur Einführung der Mittel (9) für den Schneidklemm-Anschluß des Kabelaußenleiters (4) versehen ist und daß diese Mittel derart ausgebildet sind, daß sie beim Einstecken in die Ausnehmung (13) den äußeren isolierenden Kabelmantel (7) durchschneiden und den Kabelaußenleiter (4) kontaktieren und im in die Ausnehmungen (13) eingesteckten Zustand selbstklemmend in der Ausnehmung gehalten sind.

2. Schneidklemm-Anschlußeinrichtung nach Anspruch 1,
**dadurch gekennzeichnet,**
**daß** die Mittel für den Schneidklemm-Anschluß des Kabelaußenleiters (4) aus mindestens einer etwa U-förmigen Klammer (9) bestehen, deren Innenkanten als Schneidzonen (12) ausgebildet sind.

3. Schneidklemm-Anschlußeinrichtung nach Anspruch 2,
**dadurch gekennzeichnet,**
**daß** der innere Abstand der Seitenschenkel (10) der Klammer (9) voneinander geringer als der Außendurchmesser des Kabelaußenleiters (4) und größer ist als der Außendurchmesser der Innenisolierung (8) zwischen Kabelaußenleiter (4) und Kabelinnenleiter (5).

4. Schneidklemm-Anschlußeinrichtung nach Anspruch 2 oder 3,
**dadurch gekennzeichnet,**
**daß** die freien Enden der Seitenschekel (10) der Klammer (9) spitz zulaufend ausgebildet sind.

5. Schneidklemm-Anschlußeinrichtung nach einem der Ansprüche 2 bis 4,
**dadurch gekennzeichnet,**
**daß** der die Seitenschenkel (10) miteinander verbindende Mittelsteg (11) der Klammer (9) an mindestens einer seitlichen Außenfläche eine Rändelung (16) aufweist und zur selbstklemmenden Halterung der Klammer (9) in die Ausnehmung (13) des Kabelanschlußstutzens (3) eingepreßt ist.

6. Schneidklemm-Anschlußeinrichtung nach Anspruch 5,
**dadurch gekennzeichnet,**
**daß** die Dicke (c) der Klammer (9) im Bereich des gerändelten Mittelsteges (11) größer ist als die Breite (a) der Ausnehmung (13) und deren Breite (a) größer ist als die Dicke (b) der Seitenschenkel (10) der Klammer (9).

7. Schneidklemm-Anschlußeinrichtung nach einem der vorhergehenden Ansprüche,
**dadurch gekennzeichnet,**
**daß** die Ausnehmungen des Kabelanschlußstutzens (3) von Schlitzen (13) in der Wandung des Kabelanschlußstutzens gebildet sind.

8. Schneidklemm-Anschlußeinrichtung nach Anspruch 7,
**dadurch gekennzeichnet,**
**daß** als weitere Ausnehmungen zur Einführung der Seitenschenkel (10) einer Klammer (9) im Bereich der Schlitze (13) Querbohrungen (14) in der Wandung des Kabelanschlußstutzens (3) vorgesehen sind.

9. Schneidklemm-Anschlußeinrichtung nach einem der Ansprüche 1 bis 7,
**dadurch gekennzeichnet,**
**daß** in den Kabelanschlußstutzen (3a) eine aus Isoliermaterial bestehende, kabelangepaßte Adapterhülse (31) verdrehsicher eingesetzt ist und daß die Wandung der Adapterhülse mit quer zu ihrer Mittelachse verlaufenden, nach außen offenen Ausnehmungen (33) versehen ist, die im verdrehsicher eingesetzen Zustand über die Ausnehmungen (32) des Kabelanschlußstutzens (3a) zur Einführung kabelangepaßter Klammern (9a) zugänglich sind.

10. Schneidklemm-Anschlußeinrichtung nach Anspruch 9,
**dadurch gekennzeichnet,**
**daß** die Adapterhülse (31) im Bereich ihrer nach außen weisenden Stirnseite (34) mit seitlich abstehenden, in entsprechende Aussparungen (35) der Wandung des Kabelanschlußstutzens (3a) eingreifenden Vorsprüngen (36) ausgebildet ist, die so angeordnet sind, daß sich die Ausnehmungen (33) der in den Kabelanschlußstutzen (3a) eingesetzten Adapterhülse (31) im Bereich der Ausnehmungen (32) des Kabelanschlußstutzens (3a) befinden.

11. Schneidklemm-Anschlußeinrichtung nach Anspruch 9 oder 10,
**dadurch gekennzeichnet,**
**daß** die Adapterhülse (31) im Bereich ihrer nach außen weisenden Stirnseite (34) an ihrer Innenwandung mit einer durch scharfkantige Rillen gebildeten Kabelklemmzone (37) und mit in der Mittelachse liegenden, zur Stirnseite hin offenen Schlitzen (38) versehen ist.

12. Schneidklemm-Anschlußeinrichtung nach Anspruch 1,
**dadurch gekennzeichnet,**
**daß** die Mittel für den Schneidklemm-Anschluß des Kabelaußenleiters (4) von mindestens zwei am Außenumfang gerändelten, leitend ausgebildeten Klemmstöpseln (53) gebildet sind, die von entgegengesetzten Seiten radial in Bohrungen (52) der Wandung des Kabelanschlußstutzens (3c) selbstklemmend in diese eingepreßt sind und an derjenigen Seite, welche dem in den Kabelanschlußstutzen (3c) eingeführten Koaxialkabel zugewandt ist, mit Schneidzonen (54) ausgebildet sind.

13. Schneidklemm-Anschlußeinrichtung nach einem der vorhergehenden Ansprüche,
**dadurch gekennzeichnet,**
**daß** die Ausnehmungen (13, 14) des Kabelanschlußstutzens (3) für die Einführung der Mittel (9) zum Schneidklemm-Anschluß des Kabelaußenleiters (4) an einander etwa gegenüberliegenden Stellen am Umfang des Kabelanschlußstutzens vorgesehen sind.

14. Schneidklemm-Anschlußeinrichtung nach einem der Ansprüche 1 bis 8 und 12 oder 13,
**dadurch gekennzeichnet,**
**daß** der Innendurchmesser des Kabelanschlußstutzens (3) etwa gleich dem Außendurchmesser des Koaxialkabels (6) über dessen äußeren isolierenden Kabelmantel (7) ist.

15. Schneidklemm-Anschlußeinrichtung nach einem der Ansprüche 9 bis 11,
**dadurch gekennzeichnet,**
**daß** der Innendurchmesser des Kabelanschlußstutzens (3a) etwa gleich dem Außendurchmesser der eingesetzten Adapterhülse (31) und deren Innendurchmesser dem Außendurchmesser des Koaxialkabels (6) über dessen äußeren isolierenden Kabelmantel (7) ist.

16. Schneidklemm-Anschlußeinrichtung nach Anspruch 1,
**dadurch gekennzeichnet,**
**daß** die Mittel (106) für den Schneidklemm-Anschluß durch mindestens einen Klemmstöpsel gebildet sind, welcher derart ausgebildet ist, daß er an derjenigen Seite, welche beim Einstecken in die Ausnehmung dem in den Kabelanschlußstutzen (101b) eingeführten Koaxialkabel (107) zuzuwenden ist, eine Aussparung (106d) zur teilweisen Aufnahme des Koaxialkabels aufweist.

17. Schneidklemm-Anschlußeinrichtung nach Anspruch 16,
**dadurch gekennzeichnet,**
**daß** die im Kabelanschlußstutzen (101b) vorgesehene Ausnehmung eine durch die Wandung des Kabelanschlußstutzen gehende Bohrung ist.

18. Schneidklemm-Anschlußeinrichtung nach Anspruch 16 oder 17,
**dadurch gekennzeichnet,**
**daß** die Bohrung und der Klemmstöpsel (106) im wesentlichen übereinstimmende Querschnitte aufweisen.

19. Schneidklemm-Anschlußeinrichtung nach einem der Ansprüche 16 bis 18,
**dadurch gekennzeichnet,**
**daß** die Bohrung und der Klemmstöpsel (106) im wesentlichen übereinstimmende, von der Kreisform abweichende Querschnitte aufweisen.

20. Schneidklemm-Anschlußeinrichtung nach einem der Ansprüche 16 bis 19,
**dadurch gekennzeichnet,**
**daß** der Klemmstöpsel (106) an derjenigen Seite, welche einem in den Kabelanschlußstutzen (101b) eingeführten Koaxialkabel (107) zuzuwenden ist, eine oder mehrere Schneidzonen (106a, 106b) zum Durchschneiden des äußeren isolierenden Kabelmantels (107d) und zum Kontaktieren des Kabelaußenleiters (107c) aufweist.

21. Schneidklemm-Anschlußeinrichtung nach Anspruch 20,
**dadurch gekennzeichnet,**
**daß** die Schneidzonen (106a, 106b) durch eine oder mehrere spitz zulaufende Erhebungen gebildet werden, die jeweils entlang des Umfangs derjenigen Seite des Klemmstöpsels (106) verlaufen, welche dem in den Kabelanschlußstutzen (101b) eingeführten Koaxialkabel (107) zuzuwenden ist.

22. Schneidklemm-Anschlußeinrichtung nach Anspruch 20 oder 21,
**dadurch gekennzeichnet,**
**daß** die im Klemmstöpsel (106) vorgesehene Aussparung (106d) zur Aufnahme des Koaxialkabels (107) frei von Schneidzonen ist.

23. Schneidklemm-Anschlußeinrichtung nach einem der Ansprüche 16 bis 22,
**dadurch gekennzeichnet,**
**daß** die Aussparung (106d) des Klemmstöpsels (106) einen im wesentlichen U-förmigen Querschnitt hat.

24. Schneidklemm-Anschlußeinrichtung nach einem der Ansprüche 16 bis 23,
**dadurch gekennzeichnet,**
**daß** die Breite der im Klemmstöpsel (106) vorgesehenen Aussparung (106d) zur Aufnahme des Koaxialkabels (107) geringer ist als der Außendurchmesser der Innenisolierung (107b) zwischen Kabelaußenleiter (107c) und Kabelinnenleiter (107a) des Koaxialkabels (107).

25. Schneidklemm-Anschlußeinrichtung nach einem der Ansprüche 16 bis 24,
**dadurch gekennzeichnet,**
**daß** die Aussparung (106d) zur Aufnahme des Koaxialkabels (107) nutenförmig ausgebildet ist und quer über die gesamte dem Koaxialkabel (107) zugewandten Seite des Klemmstöpsels verläuft.

26. Schneidklemm-Anschlußeinrichtung nach einem der Ansprüche 16 bis 25,
**dadurch gekennzeichnet,**
**daß** der Klemmstöpsel (106) entlang seiner seitlichen Außenfläche eine Rändelung aufweist.

27. Schneidklemm-Anschlußeinrichtung nach Anspruch 26,
**dadurch gekennzeichnet,**
**daß** die Abmessungen des Klemmstöpsels (106) im gerändelten Bereich größer sind als die der Bohrung und die Abmessungen der Bohrung größer sind als die des Klemmstöpsels in einem nicht gerändelten Bereich.

28. Schneidklemm-Anschlußeinrichtung nach einem der Ansprüche 16 bis 27,
**dadurch gekennzeichnet,**
**daß** als Mittel für den Schneidklemm-Anschluß zwei Klemmstöpsel (106) vorgesehen sind, und daß die entsprechenden Bohrungen des Kabelanschlußstutzens (101b) für die Einführung der Klemmstöpsel an einander gegenüberliegenden Stellen am Umfang des Kabelanschlußstutzens vorgesehen sind.

29. Schneidklemm-Anschlußeinrichtung nach einem der Ansprüche 16 bis 28,
**dadurch gekennzeichnet,**
**daß** der Innendurchmesser des Kabelanschlußstutzens (101b) etwa gleich dem Außendurchmesser des Koaxialkabels (107) über dessen äußeren isolierenden Kabelmantel (107d) ist.

## Claims

1. Insulation displacement connecting device for coaxial cables, comprising a housing (1) in conducting form with a cable connecting gland (3) and means (9 and 17, 18) for the insulation displacement connection (IDC) of the cable outer conductor (4), **characterised in that** the cable connecting gland (3) is provided with at least one recess (13) which extends transversely to its central axis and opens outwards, for insertion of the means (9) for the insulation displacement connection of the cable outer conductor (4), and that these means are in such a form that when they are inserted into the recess (13) they cut through the outer insulating cable sheath (7) and contact the cable outer conductor (4), and once inserted into the recesses (13) are held in the recess in a self-clamping manner.

2. Insulation displacement connecting device according to claim 1, **characterised in that** the means for the insulation displacement connection of the cable outer conductor (4) consist of at least one substantially U-shaped clip (9), the inner edges of which are in the form of cutting regions (12).

3. Insulation displacement connecting device according to claim 2, **characterised in that** the inner distance between the lateral arms (10) of the clip (9) is smaller than the external diameter of the cable outer conductor (4), and greater than the external diameter of the inner insulation (8) between the cable outer conductor (4) and cable inner conductor (5).

4. Insulation displacement connecting device according to claim 2 or 3, **characterised in that** the free ends of the lateral arms (10) of the clip (9) are in tapered form.

5. Insulation displacement connecting device according to any of claims 2 to 4, **characterised in that** the central bridge (11), which connects the lateral arms (10) to each other, of the clip (9) has knurling (16) on at least one lateral external surface, and is pressed into the recess (13) of the cable connecting gland (3) so that the clip (9) is fixed by self-clamping.

6. Insulation displacement connecting device according to claim 5, **characterised in that** the thickness (c) of the clip (9) in the region of the knurled central bridge (11) is greater than the width (a) of the recess (13), and its width (a) is greater than the thickness (b) of the lateral arms (10) of the clip (9).

7. Insulation displacement connecting device according to any of the preceding claims, **characterised in that** the recesses of the cable connecting gland (3) are in the form of slots (13) in the wall of the cable connecting gland.

8. Insulation displacement connecting device according to claim 7, **characterised in that**, as further recesses for inserting the lateral arms (10) of a clip (9) in the region of the slots (13), transverse holes (14) are provided in the wall of the cable connecting gland (3).

9. Insulation displacement connecting device according to any of claims 1 to 7, **characterised in that** an adapter sleeve (31) consisting of insulating material and adapted to the cable is inserted non-rotatably in the cable connecting glands (3a), and that the wall of the adapter sleeve is provided with recesses (33) which extend transversely to its central axis and open outwards and which, once inserted non-rotatably, are accessible via the recesses (32) of the cable connecting gland (3a), for insertion of clamps (9a) adapted to the cable.

10. Insulation displacement connecting device according to claim 9, **characterised in that** the adapter sleeve (31) in the region of its outwardly directed face (34), is constructed with lateral projections (36) which engage in corresponding recesses (35) in the wall of the cable connecting gland (3a) and are arranged so that the recesses (33) of the adapter sleeve (31) which is inserted into the cable connecting gland (3a) is in the region of the recesses (32) of the cable connecting gland (3a).

11. Insulation displacement connecting device according to claim 9 or 10, **characterised in that** the adapter sleeve (31), in the region of its outwardly directed face (34), is provided on its inner wall with a cable clamping region (37) formed by sharp-edged grooves, and with slots (38) which lie in the central axis and are open to the front face.

12. Insulation displacement connecting device according to claim 1, **characterised in that** the means for the insulation displacement connection of the cable outer conductor (4) are in the form of at least two conductive clamping plugs (53), which are knurled on the outer periphery are pressed from opposite sides radially into holes (52) in the wall of the cable connecting gland (3c) so that they clamp themselves therein, and are constructed with cutting regions (54) on the side facing the coaxial cable which is inserted into the cable connecting gland (3c).

13. Insulation displacement connecting device according to any of the preceding claims, **characterised in that** the recesses (13, 14) of the cable connecting gland (3) for inserting the means (9) for insulation displacement connection of the cable outer conductor (4) are provided in substantially opposite positions on the periphery of the cable connecting gland.

14. Insulation displacement connecting device according to any of claims 1 to 8 and 12 or 13, **characterised in that** the internal diameter of the cable connecting gland (3) is approximately equal to the external diameter of the coaxial cable (6) over its outer insulating cable sheath (7).

15. Insulation displacement connecting device according to any of claims 9 to 11, **characterised in that** the internal diameter of the cable connecting gland (3a) is approximately equal to the external diameter of the inserted adapter sleeve (31 ), of which the internal diameter is approximately equal to the external diameter of the coaxial cable (6) over its outer insulating cable sheath (7).

16. Insulation displacement connecting device according to claim 1, **characterised in that** the means (106) for the insulation displacement connection are in the form of at least one clamping plug, which is in such a form that on the side which is to be turned towards the coaxial cable (107) which is inserted into the cable connecting gland (101b) when it is inserted into the recess, has an aperture (106d) for partial reception of the coaxial cable.

17. Insulation displacement connecting device according to claim 16, **characterised in that** the recess provided in the cable connecting gland (101b) is a hole which passes through the wall of the cable connecting gland.

18. Insulation displacement connecting device according to claim 16 or 17, **characterised in that** the hole and the clamping plug (106) have substantially corresponding cross-sections.

19. Insulation displacement connecting device according to any of claims 16 to 18, **characterised in that** the hole and the clamping plug (106) have substantially corresponding cross-sections which differ from a circular shape.

20. Insulation displacement connecting device according to any of claims 16 to 19, **characterised in that** the clamping plug (106), on the side which is to be turned towards a coaxial cable (107) inserted into the cable connecting gland (101b), has one or more cutting regions (106a, 106b) for cutting through the outer insulating cable sheath (107d) and contacting the cable outer conductor (107c).

21. Insulation displacement connecting device according to claim 20, **characterised in that** the cutting regions (106a, 106b) are in the form of one or more tapering ridges, each of which extends along the periphery of that side of the clamping plug (106) which is to be turned towards the coaxial cable (107) inserted into the cable connecting gland (101b).

22. Insulation displacement connecting device according to claim 20 or 21, **characterised in that** the aperture (106d) provided in the clamping plug (106) to receive the coaxial cable (107) is free of cutting regions.

23. Insulation displacement connecting device according to any of claims 16 to 22, **characterised in that** the aperture (106d) of the clamping plug (106) has a substantially U-shaped cross-section.

24. Insulation displacement connecting device according to any of claims 16 to 23, **characterised in that** the width of the aperture (106d) provided in the clamping plug (106) to receive the coaxial cable (107) is smaller than the external diameter of the inner insulation (107b) between the cable outer conductor (107c) and the cable inner conductor (107a) of the coaxial cable (107).

25. Insulation displacement connecting device according to any of claims 16 to 24, **characterised in that** the aperture (106d) to receive the coaxial cable (107) is in the form of a groove, and extends transversely over the whole side of the clamping plug which is turned towards the coaxial cable (107).

26. Insulation displacement connecting device according to any of claims 16 to 25, **characterised in that** the clamping plug (106) has knurling along its lateral external surface.

27. Insulation displacement connecting device according to claim 26, **characterised in that** the dimensions of the clamping plug (106) in the knurled region are greater than those of the hole, and the dimensions of the hole are greater than those of the clamping plug in an unknurled region.

28. Insulation displacement connecting device according to any of claims 16 to 27, **characterised in that** as means for the insulation displacement connection, two clamping plugs (106) are provided, and that the corresponding holes of the cable connecting gland (101b) for inserting the clamping plugs are provided on mutually opposed positions on the periphery of the cable connecting gland.

29. Insulation displacement connecting device according to any of claims 16 to 28, **characterised in that** the internal diameter of the cable connecting gland (101b) is approximately equal to the external diameter of the coaxial cable (107) over its outer insulating cable sheath (107d).

## Revendications

1. Dispositif de raccordement autodénudant pour des câbles coaxiaux, comportant un boîtier conducteur (1) avec un manchon de raccordement du câble (3) et des moyens (9 ou 17, 18) pour le raccordement autodénudant (IDC) du conducteur externe du câble (4), **caractérisé en ce que** le manchon de raccordement du câble (3) comporte au moins un évidement (13), s'étendant transversalement à son axe central, ouvert vers l'extérieur, en vue de l'insertion des moyens (9) servant au raccordement autodénudant du conducteur externe du câble (4), ces moyens étant configurés de sorte à découper la gaine de câble isolante externe (7) lors de l'insertion dans l'évidement (13) et à contacter le conducteur externe du câble (4) et étant retenus dans l'état d'insertion dans les évidements (13) par auto-serrage dans l'évidement.

2. Dispositif de raccordement autodénudant selon la revendication 1, **caractérisé en ce que** les moyens servant au raccordement autodénudant du conducteur externe du câble (4) sont constitués par au moins une pince en U (9), dont les bords internes forment des zones de coupe (12).

3. Dispositif de raccordement autodénudant selon la revendication 2, **caractérisé en ce que** la distance interne des branches latérales (10) de la pince (9) est inférieure au diamètre extérieur du conducteur externe du câble (4) et supérieure au diamètre extérieur de l'isolation interne (8) entre le conducteur externe du câble (4) et le conducteur interne du câble (5).

4. Dispositif de raccordement autodénudant selon les revendications 2 ou 3, **caractérisé en ce que** les extrémités libres des branches latérales (10) de la pince (9) se terminent en pointe.

5. Dispositif de raccordement autodénudant selon l'une des revendications 2 à 4, **caractérisé en ce que** la traverse centrale (11) de la pince (9) reliant les branches latérales (10) comporte un moletage (16), au moins au niveau d'une surface latérale externe, et est insérée par pression dans l'évidement (13) du manchon de raccordement du câble (3) en vue de la retenue par auto-serrage de la pince (9).

6. Dispositif de raccordement autodénudant selon la revendication 5, **caractérisé en ce que** dans la zone de la traverse centrale moletée (11) l'épaisseur (c) de la pince (9) est supérieure à la largeur (a) de l'évidement (13), sa largeur (a) étant supérieure à l'épaisseur (b) des branches latérales (10) de lapince (9).

7. Dispositif de raccordement autodénudant selon l'une des revendications précédentes, **caractérisé en ce que** les évidements du manchon de raccordement du câble (3) sont constitués par des fentes (13) dans la paroi du manchon de raccordement du câble.

8. Dispositif de raccordement autodénudant selon la revendication 7, **caractérisé en ce que** des alésages transversaux (14), constituant des évidements additionnels en vue de l'insertion des branches latérales (10) d'une pince (9) dans la région des fentes (13), sont agencés dans la paroi du manchon de raccordement du câble (3).

9. Dispositif de raccordement autodénudant selon l'une des revendications 1 à 7, **caractérisé en ce que** qu'une douille d'adaptation (31) composée de matériau isolant, adaptée au câble, est agencée sans torsion dans le manchon de raccordement du câble (3a), la paroi de la douille d'adaptation comportant des évidements (33) s'étendant transversalement par rapport à son axe central, ouverts vers l'extérieur, accessibles dans l'état d'insertion sans torsion par l'intermédiaire des évidements (32) du manchon de raccordement du câble (3a) en vue de l'insertion de pinces adaptées au câble (9a).

10. Dispositif de raccordement autodénudant selon la revendication 9, **caractérisé en ce que** la douille d'adaptation (31) comporte dans la région de son côté frontal (34) orienté vers l'extérieur des saillies (36) à débordement latéral s'engageant dans des évidements correspondants (35) de la paroi du manchon de raccordement du câble (3a), agencées de sorte que les évidements (33) de la douille d'adaptation (31) insérée dans le manchon de raccordement du câble (3a) se situent dans la région des évidements (32) du manchon de raccordement du câble (3a).

11. Dispositif de raccordement autodénudant selon les revendications 9 ou 10, **caractérisé en ce que** la douille d'adaptation (31) comporte dans la région de son côté frontal (34) orienté vers l'extérieur, au niveau de sa paroi interne une zone de serrage du câble (37) constituée par des cannelures à arêtes vives ainsi que des fentes (38) agencées dans l'axe central, ouvertes vers le côté frontal.

12. Dispositif de raccordement autodénudant selon la revendication 1, **caractérisé en ce que** les moyens servant au raccordement autodénudant du conducteur externe du câble (4) sont constitués par au moins deux chevilles de serrage (53) conductrices, moletées au niveau de leur périphérie externe, insérées par pression et à auto-serrage à partir de côtés opposés et de manière radiale dans les alésages (52) de la paroi du manchon de raccordement du câble (3c) et comportant des zones de coupe (54) au niveau du côté orienté vers le câble coaxial inséré dans le manchon de raccordement du câble (3c).

13. Dispositif de raccordement autodénudant selon l'une des revendications précédentes, **caractérisé en ce que** les évidements (13, 14) du manchon de raccordement du câble (3) sont agencés au niveau d'emplacements pratiquement opposés sur la périphérie du manchon de raccordement du câble en vue de l'insertion des moyens (9) servant au raccordement autodénudant du conducteur externe du câble (4).

14. Dispositif de raccordement autodénudant selon l'une des revendications 1 à 8 ou 12 ou 13, **caractérisé en ce que** le diamètre intérieur du manchon de raccordement du câble (3) est à peu près égal au diamètre extérieur du câble coaxial (6), mesuré au-dessus de la gaine de câble isolante externe correspondante (7).

15. Dispositif de raccordement autodénudant selon l'une des revendications 9 à 11, **caractérisé en ce que** le diamètre intérieur du manchon de raccordement du câble (3a) est à peu près égal au diamètre extérieur de la douille d'adaptation insérée (31), le diamètre intérieur de celle-ci correspondant au diamètre extérieur du câble coaxial (6), mesuré au-dessus de la gaine de câble isolante externe correspondante (7).

16. Dispositif de raccordement autodénudant selon la revendication 1, **caractérisé en ce que** les moyens (106) servant au raccordement autodénudant sont constitués par au moins une cheville de serrage, configurée de sorte qu'elle comporte au niveau du côté orienté vers le câble coaxial (107) inséré dans le manchon de raccordement du câble (101b) lors de l'insertion dans l'évidement, un évidement (106d) en vue de la réception partielle du câble coaxial.

17. Dispositif de raccordement autodénudant selon la revendication 16, **caractérisé en ce que** l'évidement agencé dans le manchon de raccordement du câble (101b) est constitué par un alésage traversant la paroi du manchon de raccordement du câble.

18. Dispositif de raccordement autodénudant selon les revendications 16 ou 17, **caractérisé en ce que** l'alésage et la cheville de serrage (106) ont pour l'essentiel des sections transversales adaptées.

19. Dispositif de raccordement autodénudant selon l'une des revendications 16 à 18, **caractérisé en ce que** l'alésage et la cheville de serrage (106) ont pour l'essentiel des sections transversales adaptées, différentes d'une forme circulaire

20. Dispositif de raccordement autodénudant selon l'une des revendications 16 à 19, **caractérisé en ce que** la cheville de serrage (106) comporte au niveau du côté orienté vers le câble coaxial (107) inséré dans le manchon de raccordement du câble (101b) une ou plusieurs zones de coupe (106a, 106b) destinées à découper la gaine de câble isolante externe (107d) et contacter le conducteur externe du câble (107c).

21. Dispositif de raccordement autodénudant selon la revendication 20, **caractérisé en ce que** les zones de coupe (106a, 106b) sont constituées par une ou plusieurs protubérances en pointe, s'étendant respectivement le long de la périphérie du côté de la cheville de serrage (106) orienté vers le câble coaxial (107) inséré dans le manchon de raccordement du câble (101b).

22. Dispositif de raccordement autodénudant selon les revendications 20 ou 21, **caractérisé en ce que** l'évidement (106d) agencé dans la cheville de serrage (106) destiné à la réception du câble coaxial (107) est exempt de zones de coupe.

23. Dispositif de raccordement autodénudant selon l'une des revendications 16 à 22, **caractérisé en ce que** l'évidement (106d) agencé dans la cheville de serrage (106) a pour l'essentiel une section transversale en U.

24. Dispositif de raccordement autodénudant selon l'une des revendications 16 à 23, **caractérisé en ce que** la largeur de l'évidement (106d) agencé dans la cheville de serrage (106) en vue de la réception du câble coaxial (107) est inférieure au diamètre extérieur de l'isolation interne (107b) entre le conducteur externe du câble (107c) et le conducteur interne du câble (107a) du câble coaxial (107).

25. Dispositif de raccordement autodénudant selon l'une des revendications 16 à 24, **caractérisé en ce que** la largeur de l'évidement (106d) servant à recevoir le câble coaxial (107) a la forme d'une cannelure et s'étend transversalement au-delà de l'ensemble du côté de la cheville de serrage orienté vers le câble coaxial (107).

26. Dispositif de raccordement autodénudant selon l'une des revendications 16 à 25, **caractérisé en ce que** la cheville de serrage (106) comporte un moletage le long de sa surface externe latérale.

27. Dispositif de raccordement autodénudant selon la revendication 26, **caractérisé en ce que** les dimensions de la cheville de serrage (106) sont plus grandes dans la région moletée que les dimensions de l'alésage, les dimensions de l'alésage étant supérieures à celles de la cheville de serrage dans une région non moletée.

28. Dispositif de raccordement autodénudant selon l'une des revendications 16 à 27, **caractérisé en ce que** les moyens servant au raccordement autodénudant sont constitués par deux chevilles de serrage (106), les alésages correspondants du manchon de raccordement du câble (101b) pour l'insertion de la cheville de serrage étant agencés en des emplacements opposés sur la périphérie du manchon de raccordement du câble.

29. Dispositif de raccordement autodénudant selon l'une des revendications 16 à 28, **caractérisé en ce que** le diamètre intérieur du manchon de raccordement du câble (101b) est à peu près égal au diamètre extérieur du câble coaxial (107), mesuré au-dessus de la gaine de câble isolante externe correspondante (107d).
